# EUROPEAN PATENT SPECIFICATION

(11) **EP 3 310 227 B1**
(45) Date of publication and mention of the grant of the patent: **28.10.2020**
(21) Application number: 16732990.3
(22) Date of filing: 15.06.2016
(51) Int. Cl.: A47J 43/046, A47J 43/07

(54) **HEAT MANAGEMENT FOR FOOD PROCESSOR**
WÄRMEABFLUSSSTEUERUNG FÜR KÜCHENMASCHINE
GESTION DE LA CHALEUR POUR ROBOT DE CUISINE

(30) Priority: 16.06.2015 EP 15172387
(43) Date of publication of application: 25.04.2018
(73) Proprietor: Société des Produits Nestlé S.A., 1800 Vevey (CH)
(72) Inventor: ABDO, Samer, 1027 Lonay (CH); DECASTEL, Sylvain, 1617 Remaufens (CH); DENISART, Jean-Luc, 1096 Cully (CH); GUYON, Bertrand, 25160 Saint Point Lac (FR); MAGATTI, Marco, 1010 Lausanne (CH); PERRIN, Alexa, 1073 Savigny (CH); PONT, Didier, 1446 Baulmes (CH); RAAD, Mohamed, 1004 Lausanne (CH); SEYDOUX, Laurent, 1673 Gillarens (CH)
(74) Representative: Schnyder, Frank Simon
(86) International application number: PCT/EP2016/063668
(87) International publication number: WO 2016/202818

(56) References cited:
- WO-A1-2014/009858
- CN-A- 102 631 151
- GB-A- 2 505 659
- US-A- 5 935 480
- US-B1- 6 281 611

## Description

### Field of the Invention

The field of the invention pertains to machines for heating a food substance, such as milk or a milk-containing substance. For instance, the machine is provided with an impeller and/or a control unit for controlling the heating profile and/or the impeller.

### Background Art

Speciality beverages in which at least a portion is made up of frothed or heated milk are becoming more and more popular. The best-known beverage of this type is a coffee of the cappuccino type. It comprises a liquid portion consisting of coffee topped by a layer of frothed milk which, because of its very much lower density, floats atop the surface of the liquid. In general, preparing one takes time, manipulation operations and cleaning.

The most customary way of preparing a milk-based froth is to pour the desired amount of milk into the container, immerse a steam outlet pipe from a coffee machine in the container, agitating it up and down to introduce the air needed to form the froth.

There also exists mechanical stirring appliances which are usually intended for domestic use for beating froth from more or less viscous food products such as eggs, ice, juices or the like. These appliances are usually ill-suited to froth the microbiologically sensitive liquids such as milk. Regular cleaning of the tank of the appliance needs to be envisaged in order to remove any solid food residue. In addition, heating the milk has a tendency to increase the extent to which cooked or burnt proteins are deposited on and adhere to the surfaces. The existing appliances are not, for the most part, well suited to reducing the encrustation of this solid residue, making cleaning troublesome. These appliances also have a stirring and drive mechanism which is fixed and intrudes into the tank, and this presents several disadvantages: the removal/ refitting time is not insignificant, they have a tendency to become soiled more quickly, they entail additional cost as a result of the multiplicity of components, and the stirring means are difficult to clean.

US Patent 6,318,247 relates to an appliance for preparing hot beverages or food with stirring such as hot chocolate, for example. Other devices for stirring food products are described in patent documents WO 2004/043213 or DE 196 24 648. Stirring systems with a magnetic engagement type are described in documents US 2,932,493, DE 1 131 372, US 4,537,332 and US 6,712,497. DE 89 15 094 relates to a refrigerated pot for dispensing a milk-based beverage. US Patent 3,356,349 discloses a stirring device that has a heated tank, magnetic drive means positioned under the tank for driving a hub located in the middle of the tank.

An improved appliance for preparing froth from a milk-based liquid or milk has been proposed in WO 2006/050900, WO 2008/142154, WO 2011/039222 and WO 2011/039224. The device has: an inner tank for receiving the liquid that is to be frothed, in which a rotatable stirrer is positioned; an outer stand holding the tank; drive and control means which are in a cavity located between the inner tank and the outer stand, and which communicate with a switch and electrical connections located on the outer surface of the stand; and disturbance means to optimise circulation of the milk during frothing. In WO 2010/023313 a steam source is associated with the stirring effect.

More recently, it has been proposed, as described in WO 2009/074555 and WO 2011/144647, to provide a coffee machine with this type of milk conditioning tank.

Further machines of the type are described in GB 2 505 659 A, CN 102 631 151 A, US 6 281 611 B1, WO 2014/009858 A1 or US 5 935 480 A.

### Summary of the Invention

It is a preferred object of the present invention to provide a machine for heating a food substance which provides a more reliable heat management configuration.

Another preferred object of the present invention is to provide a hygienic machine for heating a food substance.

A further preferred object of the present invention is to provide a machine for heating a food substance with improved mechanical food conditioning of the food substance.

The invention thus relates to a machine for heating a food substance, such as milk or a milk-containing substance.

The machine may be a standalone machine, e.g. directly pluggable to the mains via an electric cord, or may be integrated in a food processor arranged to process other food items or to carry out different food conditioning processes, the food processor itself being generally pluggable to the mains via an electric cord whereas the machine is a sub-part of the food processor. Such a food processor may be a beverage maker, such as a coffee maker, e.g. a beverage maker configured to prepare a beverage (such as coffee) from an ingredient capsule.

The machine of the invention may advantageously be configured to froth and/or heat milk and optionally be associated, as a standalone machine or as an integrated machine, into a coffee maker. Standalone and integrated associations of milk frothing machines and coffee makers are for example disclosed in WO 2006/050900, WO 2008/142154, WO 2009/074555, WO 2010/023312 and WO 2010/023313.

Hence, the machine can be a milk frother which operates by incorporating finely divided gas bubbles, e.g. air bubbles, into milk. When the machine is configured for incorporating gas bubbles into the milk, it may include an operating mode without incorporation of gas bubbles.

The machine of the invention has a heating system for heating the food substance. Optionally, it includes a control system of the heating system for:
- carrying out different heating profiles over time and/or for carrying out one or more heating profiles of constant or variable heating; and/or
- disabling the heating system and optionally activating a cooling system of constant or variable cooling.

The machine has a container delimiting a cavity for containing the food substance to be heated. The container may be provided with an optional lid for confining the food substance within the cavity.

The container may have a side wall and a bottom wall for delimiting its cavity.

The container can be generally cup-shaped or bowl-shaped or cylinder-shaped, the sidewall being generally upright and the bottom wall being generally flat or curved.

The container can be provided with a thermally insulating outside material and/or with a handle, for seizure and optional displacement of the container by a human hand. Such a configuration is particularly advantageous when the food is processed at a higher temperature exceeding e.g. 50°C or below 10°C.

The machine includes a module having a housing means that contains an inner chamber and that delimits a seat. When the machine is integrated in a food processor, e.g. a beverage maker such as a coffee machine, the machine's module may be integrated into the food processor whereas the container can be fixed to the module or removably mounted thereto.

The seat may be generally planar or cylindrical or cup-shaped.

The container may be mechanically passive. Hence, beyond the inherent mechanical properties of the materials making its structure for containing the food substance and for being integrated or assembled in the machine, the container may be free of any mechanically active part such as a motor or movement transformation system which may require special care for hygiene or cleaning purposes.

The container may be electrically passive. Hence, beyond the inherent electric properties of the materials making its structure for containing the food substance and for being integrated or assembled in the machine, the container may be free of any electric active parts such as an electric circuit of discrete or integrated components (e.g. resistors, inductances, transistors,...) that require special care for hygiene or cleaning purposes.

By providing a container which is mechanically and/or electrically passive (optionally with a lid that is equally passive), it can easily be cleaned, e.g. in a dishwater, without any risk of damaging electric and/or mechanic components.

The container is mounted, such as removably mounted, on or in the seat. The container may be assembled to or on the seat or simply placed on or in the seat. For instance, the container is removable from the seat for normal operation, e.g. to dispense the food substance, e.g. milk, from the container. The container can be removable from the seat for servicing or maintenances purposes only.

The module's inner chamber contains one or more electric components comprising a generator of an oscillating electromagnetic field directed to the container for heating the food substance in the container. At least one of the said one or more electric components radiates heat within the chamber when electrically powered, such as heat generated by an electric resistance of the component(s).

The housing means has a separation section and an outside section distinct from the separation section. The separation section and the outside section delimit at least part of the chamber. The separation section separates the chamber from the seat. The outside section is separated from the seat by the chamber.

In accordance with the invention, the separation section and the outside section have such respective thermal conductivities as to promote an evacuation of the heat radiated within the chamber outside the module via the outside section rather than into the container via the separation section. For instance, the ratio of heat evacuated via the outside section over heat evacuated via the separation section is of more than 2 such as at least 4 e.g. at least 9.

By providing a preferential heat evacuation path (via the outside section) from the module chamber to minimise a transfer of such heat into the container, the heat generated in the container originates mainly from the electromagnetic field directed to the container by the generator and is not or only insignificantly influenced by the heat generated within the module's chamber. Consequently, the heat generation depends predominantly on an appropriate control of the generator (rather than on unwanted heat generated within the chamber). As a corollary, when the generator is switched off because no heating is temporarily desired in the container (or when the container is actively cooled, when such feature is available), the container is not (or only insignificantly) exposed to unwanted heat from within the chamber. Indeed such unwanted heat is predominantly evacuated via the outside section to outside the machine rather than via the separation section into the seat and then into the container.

The generator may be configured to induce an electric heating current in an inductively heatable component that has a surface for radiating heat into the cavity. The component can be located in the cavity or may form a wall of the container, the component surface delimiting the cavity. The component may be made of aluminium or food-safe stainless e.g. AiSi 304. For instance, the generator comprises at least one induction coil, such as an induction coil located adjacent to the separation section. A plurality of induction coils may of course be arranged around the seat.

The generator may be configured to emit microwaves for generating heating microwaves directly in the food substance in the container. Such a microwave generator can operate according to the known principles as for example known in the food heating technology, e.g. microwave ovens. The container can made of electrically non-conductive glass or polymeric material.

One or more of the electric components can include at least one of a control unit and a power management unit.

Typically, the control unit is in data-communication with a user-interface for the input of user-requests corresponding to a heating or other process (e.g. cooling and/or imparting a mechanical effect, as discussed below) to be carried out onto the food substance. The user interface can include one or more user-selectors, e.g. push and/or turn buttons, a touch-screen, touch-pad, etc...

One or more of the electric components may include an electric motor.

The electric motor can have an output drive axis with a driver device configured to drive in the container a follower device of an impeller (e.g. a frothing disk and/or a whisk) for imparting a mechanical effect to the food substance in the container. For instance, the output drive axis is configured to drive the follower device in rotation.

The driver device and the follower device can be configured to rotate about a central axial direction.

The driver device and the generator may be controlled by a control unit according to a processing program of the food substance. For instance, the impeller may be driven with or without heating via the generator. The said one or more electric components can include an active cooling device such as a refrigerating device which may be activated and/or deactivated while driving the impeller.

The driver device and the follower device can be magnetically coupled through a sidewall and/or bottom wall of the container. The magnetic coupling force can be in the range of 3 to 50 such, as 5 to 25, e.g. 10 to 15 N.

The driver device can include a magnetic field-generating element that is arranged to be magnetically coupled to a corresponding ferromagnetic element of the follower device.

The follower device may include a magnetic field-generating element that is arranged to be magnetically coupled to a corresponding ferromagnetic element of the driver device.

The driver device can include a magnetic field-generating element that is arranged to be magnetically coupled to a corresponding magnetic field-generating element of the follower device.

For example, the elements face each other along a coupling axis that is generally parallel to a rotation axis of the follower device.

The magnetic field-generating element may include an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

The ferromagnetic element can be made of at least one of Co, Fe, Fe₂O₃, FeOFe₂0₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Electromagnetic elements may be used to control the position and/or the orientation of the impeller in the container.

The driver device may directly face the sidewall and/or bottom wall of the container or the driver device may indirectly face the sidewall and/or bottom wall of the container via a housing inner sidewall and/or inner bottom wall delimiting the seat. For instance, the driver device faces the separation section.

The follower device may extend over a predominant part of the bottom wall of the container. In this case, the follower device can be generally plate shaped, e.g. disk shaped.

The follower device can extend across a substantial part of the bottom wall along a diameter thereof. In this case, the follower device can be an elongated generally rod-shaped or bar-shaped member (e.g. extending along the bottom wall's diameter) or be formed of a plurality of such elongated members (e.g. up to 6 or 10) in a star arrangement.

The follower device may extend: over a predominant part of the bottom wall of the container, the follower device extending typically over at least 75 or 85% of a surface area of the bottom wall; across a substantial part of the bottom wall along a diameter thereof, the follower device extending typically over at least 75 or 85% of a diameter of the bottom wall.

The driver device can extend over a predominant part of a bottom part of the seat or across a substantial part of the bottom part of the seat along a diameter thereof.

The driver device can extend: over a predominant part of a bottom part of the seat, the driver device extending typically over at least 75 or 85% of a surface area of the bottom part; or across a substantial part of the bottom part of the seat along a diameter thereof, the driver device extending typically over at least 75 or 85% of a diameter of the bottom part.

The magnetic field generating element(s) and, when present the ferromagnetic element(s), can be positioned at extremal or peripheral parts of the follower device and of the driver device.

In such a configuration of the field generating element(s) and (when present) of the optional ferromagnetic element(s), the torque transmission between the driver and follower devices via such elements can be maximised. This is particularly advantageous when the impeller has a high inertia and/or is exposed to a significant resistance, e.g. when the contact surface between the impeller and the food substance is high.

The module and the follower device can each be provided with a removal magnetic field-generating element, such as removal elements that face each other via the bottom wall of the container and optionally via the housing means. The removal elements can be mounted in a mutually repulsive orientation to facilitate a separation of the follower device from the driver device.

The removal elements may face each other along an axis that is collinear with or generally parallel to the central axial direction. For instance, the removal elements comprise a pair of removal elements facing each other along the an axis that is collinear with the central axial direction.

The removal elements can generate together such a repulsive force that separating the follower device from the driver device (when magnetically coupled in the machine) requires a maximum force that is less than 15 N, such as less than 10 N, e.g. less than 5 N. This maximum force results from the difference between the (greater) overall coupling force and the (smaller) overall removal force.

The magnetic removal force itself (generated by the removal elements) can be in the range of 2 to 40 such, as 4 to 30, e.g. 8 to 15 N..

The module and the follower device may be provided with a plurality of pairs of such removal magnetic field-generating elements that are mounted in mutually repulsive orientation, optionally mounted about the central axial direction.

The removal element of the module can be located in or on: the driver device and/or the housing means.

For example, the removal magnetic field-generating elements act in mutual repulsion along or in parallel to the rotation axis of the driver device and follower device. The magnetic field-generating element(s) (and when present the ferromagnetic element) for coupling the driver and the follower devices can work in attraction along or in parallel to the rotation axis to transmit a transmission torque about the rotation axis when the driver device is moved in rotation whereby the follower device is driven magnetically to follow the driver device. In such a case the repulsive elements act against the attraction of the coupling elements along the rotation axis without significantly reducing the attraction of the coupling elements about the rotation axis (i.e. the torque transmission). Such a configuration leads to the transmission of a high torque between the driver device and the follower device, especially when the magnetic coupling elements are located at extremal positions of the driver and follower devices, while limiting the mutual attraction between the driver and follower devices (reduced by the presence of the removal elements.

The use of such removal elements is particular advantageous when elements or relatively strong mutual attraction or retention are used to transmit a drive action from a motor to the impeller. Such removal elements can be oriented to separate the impeller from the container in a direction that is orthogonal to the movement (e.g. rotation) of the impeller in the container. Hence, the force (e.g. torque) for driving the impeller is not or significantly not affect by the removal elements that act against maintaining the impeller in the container.

The machine may include an impeller comprising an impelling member having a generally disc-shaped or conically-shaped impelling surface that is drivable in rotation about a central axial direction of the impelling surface for imparting a mechanical effect to the food substance in the container to homogenise different phases in the food substance.

The impelling surface may extends over a predominant part of a bottom wall delimiting the cavity, such as an impelling surface having a surface area that is greater than 75 or 85% of the cavity's bottom wall.

The impelling surface can have at least one part protruding or recessed in a direction parallel to the axial direction, such as a surface undulated along a circular direction about the axial direction or a surface with a generally upright radial protrusion or recess.

The impelling member may have at least one opening, such as a bubble refiner opening, which extends through the member from the impelling surface to an opposite surface of the member. For instance, the opening operates by dividing gas bubbles contained in the food substance, e.g. to divide air bubbles contained in milk.

The opening may be delimited by at least one portion that has along the opening an orientation which is angled away from a direction of movement of the portion when the impelling surface is driven in rotation about the central axial direction, such as an orientation that is orthogonal to the direction of movement.

The opening can be confined by a notional circular sector defined on the disc-shaped or conically-shaped impelling surface and extending to the opposite surface.

Such sector may extend over an angle in the range of 1 to 359° deg, such as 5 to 270°, e.g. 15 to 180° for instance 30 to 90°.

Portions of the member that are adjacent to radii defining such sector and that delimit such opening can be configured to part gas bubbles contained in the food substance when the gas bubbles extend into or through the opening while the impelling surface is driven in rotation.

One or more of the openings can have a generally arched shape, e.g. a general shape of a kidney or bean, such as a shape extending around the central axial direction.

One or more of the openings may have a generally circular shape, such as a circular shape that is located off the central axial direction.

One or more of the openings can have a generally oval or elliptic shape, such as a shape extending radially on the member.

One or more of the openings may have a generally polygonal shape such as a shape that is located off the central axial direction.

One or more of the openings can extend as (an) individual opening(s) from a position adjacent the central axial direction to a position adjacent a peripheral perimeter of the member.

One or more of the openings can be located next to the central axial direction.

One or more of the openings may be located on the central axial direction.

A plurality of openings may form an openwork of two or more spaced openings. The openings can be angled apart about the central axial direction. The openings may be contained within and radially extend over different juxtaposed or overlapping notional annulus which together extend substantially uninterruptedly over an overall notional continuous annulus.

The impeller may have an impelling member that is drivable in the container for imparting a mechanical effect to the food substance in the container and that has a foot for spacing the impelling member above a bottom wall of the container, such as a foot spaced under the impelling member by a distance in the range of 0.5 to 2.5 cm e.g. 1 to 2 cm.

The foot can have a downwardly-oriented convex curved contact surface, e.g. a downwardly projecting pin, such that the impeller rests on the bottom wall entirely via this convex curved contact surface. The convex curved contact can be in contact with the bottom wall over a total surface area of typically less than 5 mm², such as less than 4 e.g. less than 3 for instance less than 2 for example less than 0.3 mm².

The contact surface can be made of hard polymeric material, such as hard plastic, or of food-safe stainless steel and be supported by a surface of the bottom wall made of ceramic material, such as PTFE, or of food-safe stainless steel e.g. AiSi 304 steel.

The impeller can be maintained in equilibrium on the downwardly-oriented convex curved contact surface:
- as a pendulum, by having its centre of gravity located vertically below the contact surface; or
- as an inverted pendulum, by having its centre of gravity located vertically above the contact surface and by being balanced by magnetic forces, e.g. by a self-adapting magnetic stabilising arrangement including for instance the magnetic field-generating element, and/or by being driven in rotation as a spinning top.

The foot may include a device for coupling to a motor, such as a follower device for magnetic coupling to a driver device of the electric motor. For instance, the coupling device has a general shape of a disk or a star extending in parallel over a bottom of the cavity and supports a plurality of magnetic field-generating elements and/or ferromagnetic elements.

Alternatively or cumulatively to the use of an impeller for imparting a mechanical effect, the machine can include another food phase homogenisation device comprising at least one of:
- an expansion chamber such as a venturi chamber, e.g. as disclosed in WO01/26520 and WO2012/097916;
- a static mixer, e.g. as disclosed in WO2012/097916; and
- a couette flow device, e.g. as disclosed in WO2014/096183.

For instance, such homogenisation device is located at an outlet of the container.

The food phase homogenisation device can operate with steam and/or air in combination with the food substance e.g. milk.

The separation section may surround at least partly the seat, the separation section forming for instance an upright wall surrounding the seat and/or a trough or platform delimiting a bottom of the seat.

The outside section may form a base or foot of the housing means.

The housing means can include a lateral section extending laterally down along an edge of the outside section. The lateral section may have one or more through openings for passing heat evacuated via the outside section from under the outside section to laterally outside the housing means.

The housing means may include a lateral section extending laterally down to above an edge of the outside section. The outside section may have one or more evacuation channels for passing heat evacuated via the outside section underneath the lateral section to outside the housing means. The lateral section may comprise the separation section or may be a further section.

The outside section may include a cooling device such as at least one of a radiator, a dissipator, e.g. a ventilator, and a heat sink. For instance, the cooling device comprises a plurality of protrusions and recesses forming a surface for thermal exchange between the chamber and outside such machine.

As mentioned above, the machine may also include a cooling device, e.g. a refrigerating device, for cooling the food substance in the container.

Such a cooling device can be different from the cooling device integrated in the outside section.

A control unit may be programmed or otherwise configured to carry out one or more heating and/or cooling and/or mechanical conditioning profiles on the food substance on request of a user.

The control unit may for instance be associated with a memory device for storing the different programs that can be carried out by the control unit.

The housing means can include a joining section that joins the separation section) to the outside section, such as a joining section forming an outer sidewall of the housing means.

The joining section may comprise the abovementioned lateral section or may be a further section.

The chamber of the module may include: a first chamber containing at least one of an electric motor, a control unit and a power management unit, such as a base chamber or a chamber below the seat; and a second chamber containing the generator, such as an upper chamber e.g. a chamber formed around the seat.

The first and second chambers can be separated by a partition section of the housing means.

The second chamber may be adjacent to the seat via the housing means and the first chamber can be distant to the seat or adjacent thereto via the housing means.

### Brief Description of the Drawings

The invention will now be described with reference to the schematic drawings, wherein:
- Figure 1 is a cross-sectional perspective view of a machine having a module and a container according to the invention;
- Figure la is an enlarged cross-sectional view of the central bottom part of the container of Fig. 1 when resting on the module of Fig. 1;
- Figures 2 is a cross-section of the module of Fig. 1 without container;
- Figure 3 is an external view of the module of Fig. 1;
- Figure 4 shows an outside section of the module of Fig. 1 which outside section is configured for evacuating heat outside the module;
- Figures 5 to 7 illustrate different impellers that can be placed into the container of Fig. 1 for imparting a mechanical effect to a food substance container in the container; and
- Figure 8 and 9 schematically illustrate two different configurations of the impeller resting in the container.

### Detailed description

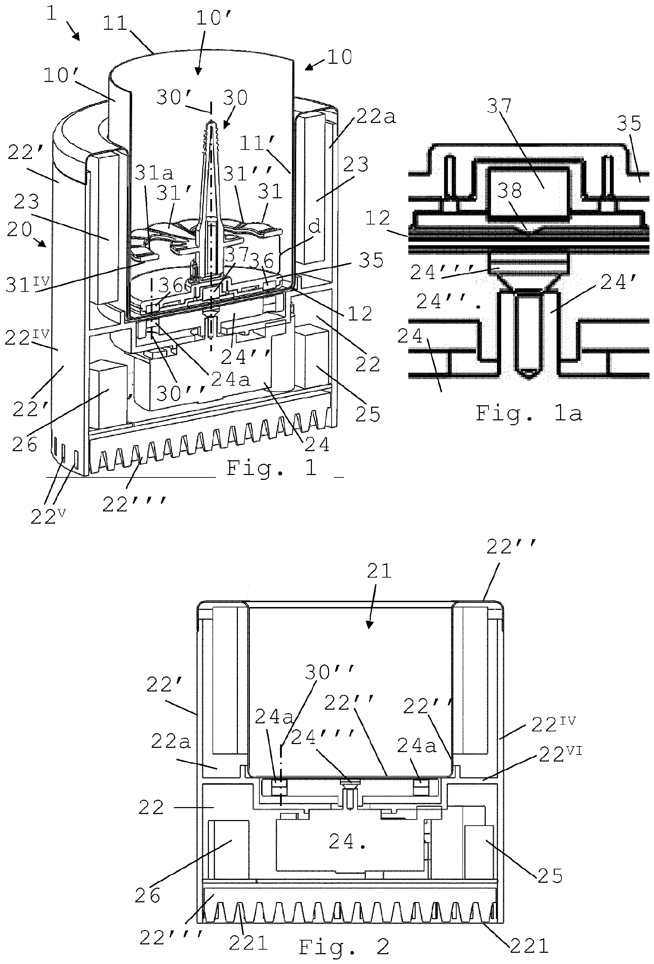

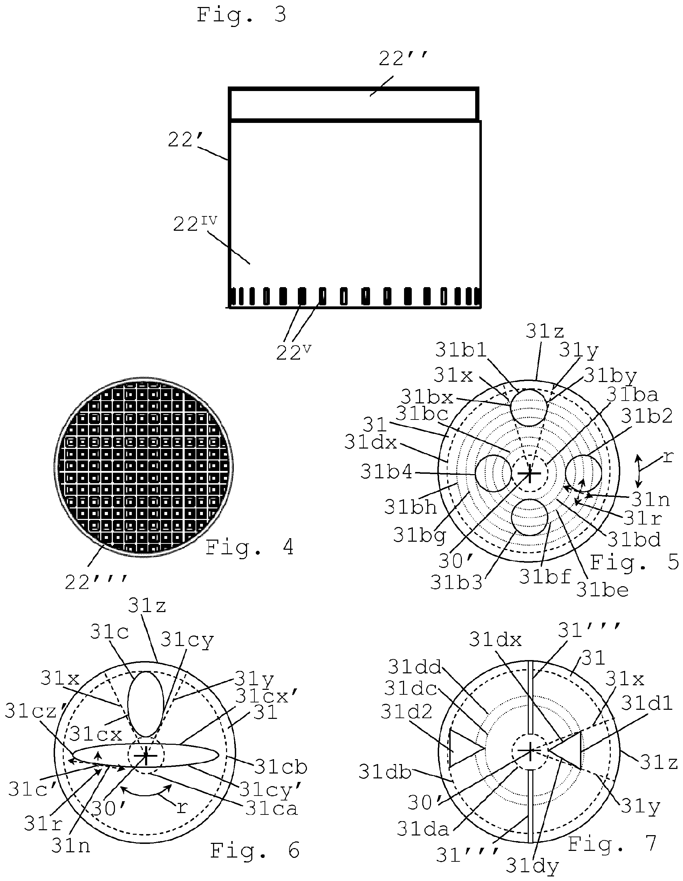

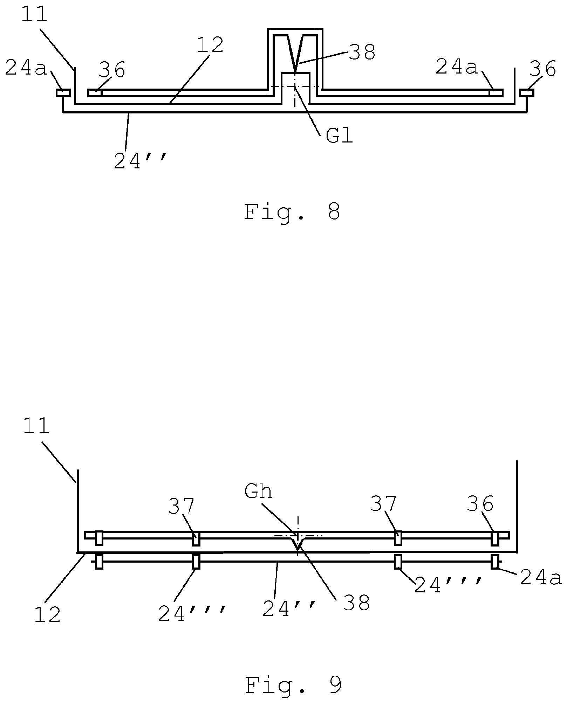

Figures 1 to 4 illustrate an embodiment of a machine 1 for heating a food substance in accordance with the invention. Figures 5 to 7 illustrate different impeller surfaces for imparting a mechanical effect to the food substance. Figures 8 and 9 illustrate different foot arrangements and magnetic arrangements of an impeller and module.

For instance, the food substance is milk to be: heated or cooled; and/or frothed. The illustrated machine 1 incorporates an impeller 30 with an impelling member 31 for imparting a mechanical effect onto the food substance. Member 31 can include a frothing disk and/or a whisk. Figures 3 to 5 illustrate alternative impelling elements 31 that can be integrated into an impeller and used with machine 1.

Machine 1 can be a standalone machine, i.e. operable as such without further infrastructure beyond the supply of electric power, or machine 1 can be incorporated into a food processor such as a beverage machine e.g. a coffee maker, in which case the electric power is provided via the food processor to machine 1.

Machine 1 includes a container 10 delimiting a cavity 10' for containing the food substance to be heated.

Container 10 may be mechanically and/or electrically passive.

Container 10 can have a side wall 11 and a bottom wall 12 for delimiting its cavity 10'.

Container 10 may be generally cup-shaped or bowl-shaped or cylinder-shaped. Sidewall 11 can be generally upright and bottom wall 12 may be generally flat or curved.

Container 10 can be provided with a thermally insulating outside material 10" and/or with a handle, for seizure and optional displacement of container 10 by a human hand.

Machine 1 has a module 20 with a housing means 22' that contains an inner chamber 22,22a and that delimits a seat 21. For instance, seat 21 may be generally planar or cylindrical or cup-shaped. Container 10 can be mounted, e.g. removably mounted, on or in seat 21.

Chamber 22,22a may contain one or more electric components 23,24,25,26 including a generator 23 of an oscillating electromagnetic field directed to container 10 for heating the food substance in container 10.

At least one of these one or more electric components 23,24,25,26 may radiate heat within the chamber 22,22a when electrically powered, such as heat generated by an electric resistance of the component 23,24,25,26.

Housing means 22' has a separation section 22" and an outside section 22"' distinct from separation section 22". Separation section 22" and outside section 22"' delimit at least part of chamber 22,22a. Separation section 22"' separate chamber 22,22a from seat 21. Outside section 22''' is separated from seat 21 by chamber 22,22a.

Separation section 22" and outside section 22"' have such respective thermal conductivities as to promote an evacuation of heat radiated within the chamber 22,22a outside module 20 via outside section 22"' rather than into container 10 via separation section 22". For instance, the ratio of heat evacuated via outside section 22'" over heat evacuated via separation section 22" is of more than 2 such as at least 4 e.g. at least 9.

Generator 3 can be configured to induce an electric heating current in an inductively heatable component 11 of machine 1. Inductively heatable component 11 may have a surface 11' for radiating heat into cavity 10'. Component 11 can be located in the cavity or can form a wall 11 of container 10, component surface 11' delimiting cavity 10'. For instance, generator 23 comprises at least one induction coil, such as an induction coil located adjacent to separation section 22".

Generator 3 may be configured to emit microwaves for generating heating microwaves directly in the food substance in the container 10.

One or more electric components 23,24,25,26 can include at least one of a control unit 25 and a power management unit 26.

One or more electric components 23,24,25,26 may include an electric motor 24. Electric motor 24 may have an output drive axis 24' with a driver device 24" configured to drive in container 10 a follower device 35 of an impeller 30 for imparting a mechanical effect to the food substance in container 10. The mechanical effect may relate to homogenising different phases in the food substance 10 such a dividing gas bubbles contained in the food substance e.g. dividing air bubbles contained in milk.

Driver device 24" and follower device 25 can be configured to rotate about a central axial direction 30'.

Driver device 24" and generator 23 may be controlled by a control unit 25 according to a processing program of the food substance. For instance, impeller 30 may be driven with or without heating via generator 23. The one or more electric components 23,24,25,26 can include an active cooling device such as a refrigerating device which may be activated and/or deactivated while driving the impeller.

Driver device 24" and follower device 35 can be magnetically coupled through a sidewall 11 and/or bottom wall 12 of the container 10.

Driver device 24" may include a magnetic field-generating element 24a that is arranged to be magnetically coupled to a corresponding ferromagnetic element 36 of follower device 35.

Follower device 24" may comprise a magnetic field-generating element 36 that is arranged to be magnetically coupled to a corresponding ferromagnetic element 24a of driver device 35.

Driver device 24" can include a magnetic field-generating element 24a that is arranged to be magnetically coupled to a corresponding magnetic field-generating element 36 of follower device 35.

These elements 24a,36 may face each other along a coupling axis 30" that is generally parallel to a rotation axis 30' of follower device 25.

The magnetic field-generating element can include an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

The ferromagnetic element can be made of at least one of Co, Fe, Fe₂O₃, FeOFe₂0₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Driver device 24" may directly face sidewall 11 and/or bottom wall 12 of container 10.

Driver device 24" may indirectly face sidewall 11 and/or bottom wall 12 of container 10 via a housing inner sidewall and/or inner bottom wall 22" delimiting seat 21, such as the separation section 22''.

Follower device 35 can extend over a predominant part of bottom wall 12 of container 10 or across a substantial part of bottom wall 12 along a diameter thereof.

Follower device 35 may extend: over a predominant part of bottom wall 12 of container 10, follower device 35 extending typically over at least 75 or 85% of a surface area of bottom wall 12; or across a substantial part of bottom wall 12 along a diameter thereof, follower device 35 extending typically over at least 75 or 85% of a diameter of the bottom wall.

Driver device 24 may extend over a predominant part of bottom part of seat 21 or across a substantial part of the bottom part of the seat 21 along a diameter thereof.

Driver device 24 can extend: over a predominant part of a bottom part of seat 21, driver device 24 extending typically over at least 75 or 85% of a surface area of the bottom part; or across a substantial part of the bottom part of seat 21 along a diameter thereof, driver device 24 extending typically over at least 75 or 85% of a diameter of the bottom part.

Magnetic field generating element(s) 24a,36, and when present ferromagnetic element(s) 24a,36, can be positioned at extremal or peripheral parts of follower device 35 and of driver device 24".

Module 20 and follower device 35 can each be provided with a removal magnetic field-generating element 24"',37, such as removal elements 24"',37 that face each other via bottom wall 12 of container 10 and optionally via housing means 22'. Removal elements 24"',37 can be mounted in a mutually repulsive orientation to facilitate a separation of follower device 35 from driver device 24".

Removal elements 24"',37 may face each other along an axis 30' that is collinear with or generally parallel to central axial direction 30', removal elements 24"',37 comprising for instance a pair removal elements 24"',37 facing each other along an axis 30' that is collinear with central axial direction 30'.

Removal elements 24"',37 can generate together such a repulsive force that separating follower device 35 from driver device 24" when magnetically coupled requires a maximum force that is less than 15 N, such as less than 10 N, e.g. less than 5 N. This maximum force results from the difference between the (greater) overall coupling force and the (smaller) overall removal force.

The magnetic removal force itself (generated by the removal elements) can be in the range of 2 to 40 such, as 4 to 30, e.g. 8 to 15 N.

Module 20 and follower device 35 can be provided with a plurality of pairs of such removal magnetic field-generating elements that are mounted in mutually repulsive orientation, optionally mounted about the central axial direction.

Removal element 24'" of module 20 can be located in or on: driver device 24" and/or housing means 22'.

Machine 1 may include an impeller 30 comprising an impelling member 31 having a generally disc-shaped or conically-shaped impelling surface 31',31'',31''' that is drivable in rotation r about a central axial direction 30' of impelling surface 31',31'',31''' for imparting a mechanical effect to the food substance in the container 10 so as to homogenise different phases in the food substance.

Impelling surface 31',31'',31''' can extend over a predominant part of a bottom wall 12 delimiting cavity 10', such as an impelling surface having a surface area that is greater than 75 or 85% of bottom wall 12.

Impelling surface 31',31'',31''' may have at least one part 31',31'',31''' protruding or recessed in a direction parallel to axial direction 30', such as a surface 31',31" undulated along a circular direction about axial direction 30' or a surface with a generally upright radial protrusion or recess 31"'.

Impelling member 31 can have at least one opening 31a,31b1,31b2,31b4,31b4,31c,31c',31d1,31d2, such as a bubble refiner opening 31a,31b1,31b2,31b4,31b4,31c,31c', 31d1, 31d2, which extends through member 31 from impelling surface 31',31'',31''' to an opposite surface 31^{IV} of member 31. Opening 31a,31b1,31b2,31b4,31b4,31c,31c',31d1, 31d2 may operate by dividing gas bubbles contained in the food substance, e.g. so as to divide air bubbles contained in milk.

Opening 31a,31b1,31b2,31b4,31b4,31c,31c',31d1,31d2 may be delimited by at least one portion 31bx,31by,31cx, 31cy,31cx',31cy' that has along opening 31a,31b1,31b2, 31b4,31b4,31c,31c',31d1,31d2 an orientation 31n which is angled away from a direction of movement 31r of portion 31bx,31by,31cx,31xy,31cx',31cy' when impelling surface 31',31'',31''' is driven in rotation r about central axial direction 30'. For instance, the orientation 31n is orthogonal to the direction of movement 31r.

Opening 31a,31b1,31b2,31b4,31b4,31c,31d1,31d2 can be confined by a notional circular sector 31x,31y,31z defined on disc-shaped or conically-shaped impelling surface 31',31'',31''' and extending to opposite surface 31^{IV}.

Such sector 31x,31y,31z can extend over an angle in the range of 1 to 359° deg, such as 5 to 270°, e.g. 15 to 180° for instance 30 to 90°. Sector 31x,31y,31z is typically delimited by radii 31x,31y and an arc 31z joining radii 31x,31y.

Portions 31by,31by,31cx,31cy,31dx,31dy of member 31 that are adjacent to radii 31x,31y defining such sector 31x,31y,31z and that delimit such opening 31a,31b1,31b2, 31b4,31b4,31c,31d1,31d2 can be configured to part gas bubbles contained in the food substance when the gas bubbles extend into or through the opening 31a,31b1,31b2,31b4,31b4,31c,31d1,31d2 while impelling surface 31',31'',31''' is driven in rotation.

At least one opening 31a may have a generally arched shape, e.g. a general shape of a kidney or bean, such as a shape 31a extending around axial direction 30'.

At least one opening 31b1,31b2,31b3,31b4 can have a generally circular shape, such as a circular shape that is located off axial direction 30'.

At least one opening 31c,31c' may have a generally oval or elliptic shape, such as a shape extending radially on member 31.

At least one opening 31d1,31d2 can have a generally polygonal shape such as a shape that is located off axial direction 30'.

At least one opening 31c may extend as (an) individual opening(s) from a position 31ca adjacent axial direction 30' to a position 31cb adjacent a peripheral perimeter of member 31.

At least one opening 31a,31b1,31b2,31b4,31b4,31c, 31d1, 31d2 can be located next to central axial direction 30' .

At least one opening 31c' may be located on the central axial direction 30'.

A plurality of openings 31b1,31b2,31b3,31b4;31c, 31c';31d1,31d2 may form an openwork of two or more spaced openings 31b1,31b2,31b3,31b4;31c,31c';31d1,31d2.

In the latter case, openings 31b1, 31b2, 31b3, 31b4; 31c,31c';31d1,31d2 can be:
- angled apart about the central axial direction 30'; and/or
- contained within and radially extend over different juxtaposed or overlapping notional annulus 31ba_31bf, 31bb_31be,31bc_31bg,31bd_31bh; 31da_31dd,31db_31dc which together extend substantially uninterruptedly over an overall notional continuous annulus 31ba_31bb; 31da_31db.

Impeller 30 may have an impelling member 31 that is drivable in container 10 for imparting a mechanical effect to the food substance in container 10 and that has a foot 35,38 for spacing impelling member 31 above a bottom wall 12 of container 10. For instance, foot 35,38 is spaced under the impelling member 31 by a distance d in the range of 0.5 to 2.5 cm e.g. 1 to 2 cm.

Foot 35,38 may include a downwardly-oriented convex curved contact surface 38, e.g. a downwardly projecting pin 38, such that impeller 30 rests on bottom wall 12 entirely via convex curved contact surface 38. Convex curved contact can be in contact with bottom wall 12 over a total surface area of typically less than 5 mm², such as less than 4 e.g. less than 3 for instance less than 2 for example less than 0.3 mm².

For instance, contact surface 38 is made of hard polymeric material, such as hard plastic, or of food-safe stainless steel and is supported by a surface of bottom wall 12 made of ceramic material, such as PTFE, or of food-safe stainless steel e.g. AiSi 304 steel.

Impeller 30 may be maintained in equilibrium on downwardly-oriented convex curved contact surface 38:
- as a pendulum, by having its centre of gravity Gl located vertically below contact surface 38 (Fig. 8); or
- as an inverted pendulum, by having its centre of gravity Gh located vertically above contact surface 38 and by being balanced by magnetic forces, e.g. by a self-adapting magnetic stabilising arrangement including for instance magnetic field-generating element 24a,36, and/or by being driven in rotation as a spinning top. See Fig. 9.

Motor 24 of the embodiments schematically illustrated in Figs 8 and 9 can be a motor formed of a sole stator driving the follower device as a rotor or a motor with an output axis having a driving device driving the follower device.

Foot 35,38 can include a device 35 for coupling to a motor 24, such as a follower device 35 for magnetic coupling to a driver device 24" of electric motor 24. Coupling device 35 may have a general shape of a disk or a star extending in parallel over a bottom 12 of cavity 10'. Coupling device 35 can support a plurality of magnetic field-generating elements 24a and/or ferromagnetic elements 36.

Machine 1 may include a food phase homogenisation device that comprises at least one of:
- an expansion chamber such as a venturi chamber;
- a static mixer; and
- a couette flow device.

Such food phase homogenisation device can be located at an outlet of the container.

The food phase homogenisation device may operate with steam and/or air in combination with said food substance e.g. milk.

The separation section 22" can surround at least partly seat 21. Separation section 22" may form an upright wall surrounding seat 21 and/or a trough or platform delimiting a bottom of seat 21.

Outside section 22"' can form a base or foot of housing means 22'.

Housing means 22' may include a lateral section 22^{IV} extending laterally down along an edge of outside section 22"', such as a lateral section 22^{IV} having one or more through openings 22^{V} for passing heat evacuated via outside section 2'" from under outside section 22'" to laterally outside housing means 22'.

The housing means can include a lateral section extending laterally down to above an edge of the outside section, the outside section having optionally one or more evacuation channels for passing heat evacuated via the outside section underneath the lateral section to outside the housing means.

Outside section 22'" may include a cooling device such as at least one of a radiator, a dissipator, e.g. a ventilator, and a heat sink. For instance, the cooling device comprises a plurality of protrusions 221 and recesses 222 forming a surface for thermal exchange between chamber 22,22a and outside such machine 1.

Housing means 22' may include a joining section 22^{IV} that joins separation section 22" to outside section 22"', such as a joining section forming an outer sidewall of housing means 22'.

Chamber 22,22a may include a first chamber 22 containing at least one of an electric motor 24, a control unit 25 and a power management unit 26, such as a base chamber 22 or a chamber below the seat 21.

Chamber 22,22a can include a second chamber 22a containing generator 23, such as an upper chamber e.g. a chamber formed around seat 21.

First and second chambers 22,22a can be separated by a partition section 22^{V} of housing means 22'.

Second chamber 22a may be adjacent to seat 21 via housing means 21. First chamber 22 may be distant to seat 21 or adjacent thereto via the housing means 22'.

## Claims

1. A machine (1) for heating a food substance, such as milk or a milk-based substance, as a standalone machine or as a machine incorporated in a food processor such as a beverage maker e.g. a coffee maker, such machine (1) comprising:
- a container (10) delimiting a cavity (10') for containing said food substance to be heated, such as a container (10) that is mechanically and/or electrically passive and/or that has a side wall (11) and a bottom wall (12) for delimiting its cavity (10'), the container (10) being optionally:
- generally cup-shaped or bowl-shaped or cylinder-shaped wherein the sidewall (11) is generally upright and the bottom wall (12) is generally flat or curved; and/or
- provided with a thermally insulating outside material (10") and/or with a handle, for seizure and optional displacement of the container (10) by a human hand;
- a module (20) comprising a housing means (22') that contains an inner chamber (22,22a) and that delimits a seat (21), such as a generally planar or cylindrical or cup-shaped seat (21), on or in which the container (10) is mounted, such as removably mounted, the chamber (22,22a) containing one or more electric components (23,24,25,26) comprising a generator (23) of an oscillating electromagnetic field directed to the container (10) for heating said food substance in the container (10), at least one of said one or more electric components (23,24,25,26) radiating heat within the chamber (22,22a) when electrically powered, such as heat generated by an electric resistance of the component (23,24,25,26), optionally the one or more electric components (23,24,25,26) including at least one of a control unit (25) and a power management unit (26),
the housing means (22') having a separation section (22'') and an outside section (22"') distinct from the separation section (22"), the separation section and the outside section delimiting at least part of the chamber (22,22a), the separation section (22") separating the chamber (22,22a) from the seat (21), the outside section (22"') being separated from the seat (21) by the chamber (22,22a),
**characterised in that** the separation section (22") and the outside section (22"') have such respective thermal conductivities as to promote an evacuation of said heat radiated within the chamber (22,22a) outside the module (20) via the outside section (22"') rather than into the container (10) via the separation section (22"), optionally the ratio of heat evacuated via the outside section (22"') over heat evacuated via the separation section (22") being of more than 2 such as at least 4 e.g. at least 9.

2. The machine of claim 1, wherein the generator (3) is configured to:
- induce an electric heating current in an inductively heatable component (11) of such machine (1), the inductively heatable component (11) having a surface (11') for radiating heat into the cavity (10'), the component (11) being located in the cavity or forming a wall (11) of the container (10) whereby the component surface (11') delimits the cavity (10'), optionally the generator (23) comprising at least one induction coil, such as an induction coil located adjacent to the separation section (22"); and/or
- emit microwaves for generating heating microwaves directly in said food substance in the container (10).

3. The machine of claim 1 or 2, wherein the one or more electric components (23,24,25,26) include an electric motor (24).

4. The machine of claim 3, wherein the electric motor (24) has an output drive axis (24') with a driver device (24") configured to drive in the container (10) a follower device (35) of an impeller (30), e.g. a frothing disk and/or a whisk, for imparting a mechanical effect to said food substance in the container, for instance to homogenise different phases in the food substance (10) such a dividing gas bubbles contained in said food substance e.g. dividing air bubbles contained in milk, optionally the driver device (24") and:
- the follower device (25) being configured to rotate about a central axial direction (30'); and/or
- the generator (23) being controlled by a control unit (25) according to a processing program of the food substance, such as driving the impeller (30) with or without heating via the generator (23), optionally the one or more electric components (23,24,25,26) including an active cooling device such as a refrigerating device which may be activated and/or deactivated while driving the impeller.

5. The machine of claim 4, wherein the driver device (24") and the follower device (35) are magnetically coupled through a sidewall (11) and/or bottom wall (12) of the container (10), and wherein:
- the driver device (24") comprises a magnetic field-generating element (24a) that is arranged to be magnetically coupled to a corresponding ferromagnetic element (36) of the follower device (35), optionally the elements (24a,36) facing each other along a coupling axis (30") that is generally parallel to a rotation axis (30') of the follower device (25);
- the follower device (24") comprises a magnetic field-generating element (36) that is arranged to be magnetically coupled to a corresponding ferromagnetic element (24a) of the driver device (35), optionally the elements (24a,36) facing each other along a coupling axis (30") that is generally parallel to a rotation axis (30') of the follower device (25); or
- the driver device (24") comprises a magnetic field-generating element (24a) that is arranged to be magnetically coupled to a corresponding magnetic field-generating element (36) of the follower device (35), optionally the elements (24a,36) facing each other along a coupling axis (30") that is generally parallel to a rotation axis (30') of the follower device (25),
for instance:
- the magnetic field-generating element comprising an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components; and/or
- the ferromagnetic element being made of at least one of Co, Fe, Fe₂O₃, FeOFe₂0₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe,
optionally the driver device (24") facing directly the sidewall (11) and/or bottom wall (12) of the container (10) or facing indirectly the sidewall (11) and/or bottom wall (12) of the container (10) via a housing inner sidewall and/or inner bottom wall (22'') delimiting the seat (21), such as the separation section (22").

6. The machine of claim 5, wherein the follower device (35) extends over a predominant part of the bottom wall (12) of the container (10) or across a substantial part of the bottom wall (12) along a diameter thereof and wherein the driver device (24) extends over a predominant part of a bottom part of the seat (21) or across a substantial part of the bottom part of the seat (21) along a diameter thereof, the magnetic field generating element(s) (24a,36) and when present the ferromagnetic element(s) (24a,36) being positioned at extremal or peripheral parts of the follower device (35) and of the driver device (24"), optionally:
A) the follower device (35) extending:
- over a predominant part of the bottom wall (12) of the container (10), the follower device (35) extending typically over at least 75 or 85% of a surface area of the bottom wall (12); or
- across a substantial part of the bottom wall (12) along a diameter thereof, the follower device (35) extending typically over at least 75 or 85% of a diameter of the bottom wall;
and/or
B) the driver device (24) extending:
- over a predominant part of a bottom part of the seat (21), the driver device (24) extending typically over at least 75 or 85% of a surface area of the bottom part; or
- across a substantial part of the bottom part of the seat (21) along a diameter thereof, the driver device (24) extending typically over at least 75 or 85% of a diameter of the bottom part.

7. The machine of claim 5 or 6, wherein the module (20) and the follower device (35) are each provided with a removal magnetic field-generating element (24''',37), such as removal elements (24"',37) that face each other via the bottom wall (12) of the container (10) and optionally via the housing means (22'), the removal elements being mounted in a mutually repulsive orientation to facilitate a separation of the follower device (35) from the driver device (24"), optionally the removal element (24"',37) being associated with one or more of the following features:
A) the removal elements (24"',37) facing each other along an axis (30') that is collinear with or generally parallel to the central axial direction (30'), the removal elements (24"',37) comprising for instance a pair removal elements (24"',37) facing each other along an axis (30') that is collinear with the central axial direction (30');
B) the removal elements (24"',37) generating together such a repulsive force that separating the follower device (35) from the driver device (24") when magnetically coupled requires a maximum force that is less than 15 N, such as less than 10 N, e.g. less than 5 N;
C) the module (20) and the follower device (35) being provided with a plurality of pairs of such removal magnetic field-generating elements that are mounted in mutually repulsive orientation, optionally mounted about the central axial direction; and
D) the removal element (24"') of the module (20) being located in or on: the driver device (24") and/or the housing means (22').

8. The machine of any preceding claim, which comprises an impeller (30) comprising an impelling member (31) having a generally disc-shaped or conically-shaped impelling surface (31',31'',31''') that is drivable in rotation about a central axial direction (30') of the impelling surface (31',31'',31''') for imparting a mechanical effect to said food substance in the container (10) to homogenise different phases in the food substance, optionally the impelling surface:
- extending over a predominant part of a bottom wall (12) delimiting the cavity (10'), such as an impelling surface having a surface area that is greater than 75 or 85% of the cavity's bottom wall (12); and/or
- having at least one part (31',31",31''') protruding or recessed in a direction parallel to the axial direction (30'), such as a surface (31',31'') undulated along a circular direction about the axial direction (30') or a surface with a generally upright radial protrusion or recess (31''').

9. The machine of claim 8, wherein the impelling member (31) has at least one opening (31a,31b1,31b2,31b4,31b4, 31c,31c',31d1,31d2), such as a bubble refiner opening (31a,31b1,31b2,31b4,31b4,31c,31c',31d1,31d2) e.g. operating by dividing gas bubbles contained in said food substance for instance to divide air bubbles contained in milk, which extends through the member (31) from the impelling surface (31',31'',31" ') to an opposite surface (31^{IV}) of the member (31), said opening (31a,31b1,31b2,31b4,31b4,31c,31c',31d1,31d2) being:
- delimited by at least one portion (31bx,31by,31cx,31cy,31cx',31cy') that has along the opening (31a,31b1,31b2,31b4,31b4,31c,31c',31d1,31d2) an orientation (31n) which is angled away from a direction of movement (31r) of the portion (31bx,31by,31cx,31xy,31cx',31cy') when the impelling surface (31',31'',31''') is driven in rotation (r) about the central axial direction (30'), such as an orientation (31n) that is orthogonal to the direction of movement (31r); and/or
- confined by a notional circular sector (31x,31y,31z) defined on the disc-shaped or conically-shaped impelling surface (31',31'',31''') and extending to the opposite surface (31^{IV}), optionally:
- such sector (31x,31y,31z) extending over an angle in the range of 1 to 359°, such as 5 to 270°, e.g. 15 to 180° for instance 30 to 90°; and/or
- portions (31by,31by,31cx,31cy,31dx,31dy) of the member (31) that are adjacent to radii (31x,31y) defining such sector (31x,31y,31z) and that delimit such opening (31a,31b1,31b2,31b4,31b4,31c,31d1, 31d2) being configured to part gas bubbles contained in said food substance when the gas bubbles extend into or through the opening (31a,31b1,31b2,31b4,31b4,31c,31d1,31d2) while the impelling surface (31',31'',31''') is driven in rotation,
optionally one or more of the openings (31a,31b1,31b2, 31b4,31b4,31c,31c',31d1,31d2) exhibiting at least one of the following features:
A) at least one opening (31a) having a generally arched shape, e.g. a general shape of a kidney or bean, such as a shape (31a) extending around the central axial direction (30');
B) at least one opening (31b1,31b2,31b3,31b4) having a generally circular shape, such as a circular shape that is located off the central axial direction (30');
C) at least one opening (31c,31c') having a generally oval or elliptic shape, such as a shape extending radially on the member (31);
D) at least one opening (31d1,31d2) having a generally polygonal shape such as a shape that is located off the central axial direction (30');
E) at least one opening (31c) extending as (an) individual opening(s) from a position (31ca) adjacent the central axial direction (30') to a position (31cb) adjacent a peripheral perimeter of the member (31);
F) at least one opening (31a,31b1,31b2,31b4,31b4,31c, 31d1,31d2) being located next to the central axial direction (30');
G) at least one opening (31c') being located on the central axial direction (30'); and
H) a plurality of openings (31b1,31b2,31b3,31b4;31c,31c'; 31d1,31d2) forming an openwork of two or more spaced openings (31b1,31b2,31b3,31b4;31c,31c';31d1,31d2), optionally:
- the openings (31b1,31b2,31b3,31b4;31c,31c'; 31d1,31d2) being angled apart about the central axial direction (30'); and/or
- the openings (31b1,31b2,31b3,31b4;31c,31c';31d1, 31d2) being contained within and radially extend over different juxtaposed or overlapping notional annulus (31ba_31bf,31bb_31be,31bc_31bg,31bd_31bh; 31da_31dd,31db_31dc) which together extend substantially uninterruptedly over an overall notional continuous annulus (31ba_31bb;31da_31db).

10. The machine of any preceding claim, wherein the impeller (30) has an impelling member (31) that is drivable in the container (10) for imparting a mechanical effect to said food substance in the container (10) and that has a foot (35,38) for spacing the impelling member (31) above a bottom wall (12) of the container (10), such as a foot (35,38) spaced under the impelling member (31) by a distance (d) in the range of 0.5 to 2.5 cm e.g. 1 to 2 cm, optionally the foot (35,38) comprising:
- a downwardly-oriented convex curved contact surface (38), e.g. a downwardly projecting pin (38), such that the impeller (30) rests on the bottom wall (12) entirely via said convex curved contact surface (38), the convex curved contact being in contact with the bottom wall (12) over a total surface area of typically less than 5 mm², such as less than 4 e.g. less than 3 for instance less than 2 for example less than 0.3 mm², optionally the contact surface (38) being made of hard polymeric material, such as hard plastic, or of food-safe stainless steel and being supported by a surface of the bottom wall (12) made of ceramic material, such as PTFE, or of food-safe stainless steel e.g. AiSi 304 steel; and/or
- a device (35) for coupling to a motor (24), such as a follower device (35) for magnetic coupling to a driver device (24") of the electric motor (24), such as a coupling device (35) that has a general shape of a disk or a star extending in parallel over a bottom (12) of the cavity (10') and that supports a plurality of magnetic field-generating elements (24a) and/or ferromagnetic elements (36).

11. The machine of any preceding claim, which comprises a food phase homogenisation device comprising at least one of:
- an expansion chamber such as a venturi chamber;
- a static mixer; and
- a couette flow device,
such as a food phase homogenisation device that:
- is located at an outlet of the container (10); and/or
- operates with steam and/or air in combination with said food substance e.g. milk.

12. The machine of any preceding claim, wherein the separation section (22") surrounds at least partly the seat (21), the separation section (22'') forming optionally an upright wall surrounding the seat (21) and/or a trough or platform delimiting a bottom of the seat (21).

13. The machine of any preceding claim, wherein the outside section (22"'):
A) forms a base or foot of the housing means (22'), the housing means (22') optionally including a lateral section (22^{IV}) extending laterally down:
- along an edge of the outside section (22'''), such as a lateral section (22^{IV}) having one or more through openings (22^{V}) for passing heat evacuated via the outside section from under the outside section (22"') to laterally outside the housing means (22'); or
- to above an edge of the outside section, the outside section having optionally one or more evacuation channels for passing heat evacuated via the outside section underneath the lateral section to outside the housing means (22');
and/or
B) includes a cooling device such as at least one of a radiator, a dissipator, e.g. a ventilator, and a heat sink, optionally the cooling device comprises a plurality of protrusions (221) and recesses (222) forming a surface for thermal exchange between the chamber (22,22a) and outside such machine (1).

14. The machine of any preceding claim, wherein the housing means (22') comprises a joining section (22^{IV}) that joins the separation section (22") to the outside section (22"'), such as a joining section forming an outer sidewall of the housing means (22').

15. The machine of any preceding claim, wherein the chamber (22,22a) comprises:
- a first chamber (22) containing at least one of an electric motor (24), a control unit (25) and a power management unit (26), such as a base chamber (22) or a chamber below the seat (21); and
- a second chamber (22a) containing the generator (23), such as an upper chamber e.g. a chamber formed around the seat (21),
optionally:
- the first and second chambers being separated by a partition section (22^{V}) of the housing means (22'); and/or
- the second chamber (22a) being adjacent to the seat (21) via the housing means (21) and the first chamber (22) being distant to the seat (21) or adjacent thereto via the housing means (22').

## Patentansprüche

1. Maschine (1) zum Erhitzen einer Lebensmittelsubstanz, wie etwa Milch oder eine Substanz auf Milchbasis, als eigenständige Maschine oder als Maschine, die in einen Lebensmittelprozessor, wie etwa einen Getränkebereiter, z. B. einen Kaffeeautomaten, integriert ist, wobei die Maschine (1) Folgendes umfasst:
- einen Behälter (10), der einen Hohlraum (10') zur Aufnahme der zu erhitzenden Lebensmittelsubstanz begrenzt, wie einen Behälter (10), der mechanisch und/oder elektrisch passiv ist und/oder der eine Seitenwand (11) und eine Bodenwand (12) zum Begrenzen seines Hohlraums (10') aufweist, wobei der Behälter (10) wahlweise:
- im Allgemeinen becherförmig oder schalenförmig oder zylinderförmig ist, wobei die Seitenwand (11) im Allgemeinen aufrecht ist und die Bodenwand (12) im Allgemeinen flach oder gekrümmt ist; und/oder
- mit einem wärmeisolierenden Außenmaterial (10") und/oder mit einem Griff zum Ergreifen und wahlweisen Verschieben des Behälters (10) durch eine menschliche Hand bereitgestellt ist;
- ein Modul (20), das eine Gehäuseeinrichtung (22') umfasst, die eine innere Kammer (22, 22a) enthält und einen Sitz (21) begrenzt, wie etwa einen im Allgemeinen ebenen oder zylindrischen oder becherförmigen Sitz (21), der auf oder in dem der Behälter (10) angebracht ist, wie etwa abnehmbar angebracht ist, wobei die Kammer (22, 22a) eine oder mehrere elektrische Komponenten (23, 24, 25, 26) enthält, die einen Generator (23) eines oszillierenden elektromagnetischen Felds umfassen, das auf den Behälter (10) zum Erhitzen der Lebensmittelsubstanz in dem Behälter (10) gerichtet ist, wobei mindestens eine der einen oder mehreren elektrischen Komponenten (23, 24, 25, 26) innerhalb der Kammer (22, 22a) Hitze abstrahlt, wenn sie elektrisch betrieben wird, wie etwa durch einen elektrischen Widerstand der Komponente (23, 24, 25, 26) erzeugte Hitze, wobei die eine oder mehreren elektrischen Komponenten (23, 24, 25, 26) wahlweise zumindest eine Steuereinheit (25) und eine Leistungsverwaltungseinheit (26) einschließen,
wobei die Gehäuseeinrichtung (22') einen Trennabschnitt (22") und einem Außenabschnitt (22"'), der sich von dem Trennabschnitt (22") unterscheidet, aufweist, wobei der Trennabschnitt und der Außenabschnitt zumindest einen Teil der Kammer (22, 22a) begrenzen, wobei der Trennabschnitt (22") die Kammer (22, 22a) von dem Sitz (21) trennt, wobei der Außenabschnitt (22'") durch die Kammer (22, 22a) von dem Sitz (21) getrennt ist,
**dadurch gekennzeichnet, dass** der Trennabschnitt (22") und der Außenabschnitt (22'") jeweils derartige Wärmeleitfähigkeiten aufweisen, dass ein Abführen der innerhalb der Kammer (22, 22a) abgestrahlten Hitze aus dem Modul (20) heraus über den Außenabschnitt (22'") gefördert wird, anstatt in den Behälter (10) hinein über den Trennabschnitt (22"), wobei das Verhältnis von über den Außenabschnitt (22'") abgeleiteter Hitze zu der über den Trennabschnitt (22") abgeleiteten Hitze mehr als 2, wie etwa mindestens 4, beispielsweise mindestens 9 beträgt.

2. Maschine nach Anspruch 1, wobei der Generator (3) für Folgendes eingerichtet ist:
- Induzieren eines elektrischen Heizstroms in einer induktiv beheizbaren Komponente (11) der Maschine (1), wobei die induktiv beheizbare Komponente (11) eine Oberfläche (11') zum Abstrahlen von Wärme in den Hohlraum (10') aufweist, wobei die Komponente (11) in dem Hohlraum angeordnet ist oder eine Wand (11) des Behälters (10) bildet, wobei die Komponentenoberfläche (11') den Hohlraum (10') begrenzt, wobei der Generator (23) wahlweise mindestens eine Induktionsspule umfasst, wie etwa eine Induktionsspule, die benachbart zu dem Trennabschnitt (22") angeordnet ist; und/oder
- Abstrahlen von Mikrowellen zum Erzeugen von Heizmikrowellen direkt in der Lebensmittelsubstanz in dem Behälter (10).

3. Maschine nach Anspruch 1 oder 2, wobei die eine oder mehreren elektrischen Komponenten (23, 24, 25, 26) einen Elektromotor (24) einschließen.

4. Maschine nach Anspruch 3, wobei der Elektromotor (24) eine Abtriebsachse (24') mit einer Antriebsvorrichtung (24") aufweist, die dazu eingerichtet ist, eine Mitnehmervorrichtung (35) eines Laufrads (30), z. B. eine Aufschäumscheibe und/oder einen Schneebesen, in dem Behälter (10) anzutreiben, um auf die Lebensmittelsubstanz in dem Behälter eine mechanische Wirkung auszuüben, zum Beispiel verschiedene Phasen in der Lebensmittelsubstanz (10) zu homogenisieren, wie etwa in der Lebensmittelsubstanz enthaltene Gasblasen zu teilen, z. B. in Milch enthaltene Luftblasen zu teilen, wobei wahlweise die Antriebsvorrichtung (24") und:
- die Mitnehmervorrichtung (25) derart eingerichtet sind, dass sie sich um eine Zentralachsenrichtung (30') drehen; und/oder
- der Generator (23) durch eine Steuereinheit (25) gemäß einem Verarbeitungsprogramm der Lebensmittelsubstanz gesteuert wird, wie etwa Antreiben des Laufrads (30) mit oder ohne Erhitzen über den Generator (23), wobei die eine oder mehreren elektrischen Komponenten (23, 24, 25, 26) wahlweise eine aktive Kühlvorrichtung wie ein Kältegerät einschließen, das während des Antreibens des Laufrads aktiviert und/oder deaktiviert werden kann.

5. Maschine nach Anspruch 4, wobei die Antriebsvorrichtung (24") und die Mitnehmervorrichtung (35) durch eine Seitenwand (11) und/oder Bodenwand (12) des Behälters (10) magnetisch gekoppelt sind und wobei:
- die Antriebsvorrichtung (24") ein Magnetfeld erzeugendes Element (24a) umfasst, das so angeordnet ist, dass es mit einem entsprechenden ferromagnetischen Element (36) der Mitnehmervorrichtung (35) magnetisch gekoppelt wird, wobei die Elemente (24a, 36) wahlweise einander entlang einer Kopplungsachse (30") zugewandt sind, die sich im Allgemeinen parallel zu einer Drehachse (30') der Mitnehmervorrichtung (25) befindet;
- die Mitnehmervorrichtung (24") ein Magnetfeld erzeugendes Element (36) umfasst, das so angeordnet ist, dass es mit einem entsprechenden ferromagnetischen Element (24a) der Antriebsvorrichtung (35) magnetisch gekoppelt wird, wobei die Elemente (24a, 36) wahlweise einander entlang einer Kopplungsachse (30") zugewandt sind, die sich im Allgemeinen parallel zu einer Drehachse (30') der Mitnehmervorrichtung (25) befindet; oder
- die Antriebsvorrichtung (24") ein Magnetfeld erzeugendes Element (24a) umfasst, das so angeordnet ist, dass es mit einem entsprechenden Magnetfeld erzeugenden Element (36) der Mitnehmervorrichtung (35) magnetisch gekoppelt wird, wobei die Elemente (24a, 36) wahlweise einander entlang einer Kopplungsachse (30") zugewandt sind, die sich im Allgemeinen parallel zu einer Drehachse (30') der Mitnehmervorrichtung (25) befindet,
wobei zum Beispiel:
- das Magnetfeld erzeugende Element ein Elektromagnetelement oder ein Permanentmagnetelement umfasst, das z. B. aus mindestens einem aus Eisen, Nickel, Kobalt, Seltenerdmetallen, z. B. Lanthanid, und Legierungen und Oxiden, die solche Metalle enthalten, sowie Polymeren (z. B. Kunststoffe), die solche Elemente und Komponenten tragen, hergestellt ist; und/oder
- das ferromagnetische Element aus mindestens einem von Co, Fe, Fe₂O₃, FeOFe₂0₃, NiOFe₂O₃, CuOFe₂O₃, MgOFe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂Mnln, Pd₂MnSn, Pd₂MnSb, Co₂FeSi, Fe₃Si, Fe₂VAl, Mn₂VGa und Co₂FeGe hergestellt ist,
wobei die Antriebsvorrichtung (24") wahlweise der Seitenwand (11) und/oder der Bodenwand (12) des Behälters (10) direkt zugewandt ist oder der Seitenwand (11) und/oder der Bodenwand (12) des Behälters (10) indirekt über eine den Sitz (21) begrenzende innere Seitenwand und/oder innere Bodenwand (22") des Gehäuses, wie etwa den Trennabschnitt (22"), zugewandt ist.

6. Maschine nach Anspruch 5, wobei sich die Mitnehmervorrichtung (35) über einen überwiegenden Teil der Bodenwand (12) des Behälters (10) oder über einen wesentlichen Teil der Bodenwand (12) entlang eines Durchmessers davon erstreckt und wobei sich die Antriebsvorrichtung (24) über einen überwiegenden Teil eines Bodenteils des Sitzes (21) oder über einen wesentlichen Teil des Bodenteils des Sitzes (21) entlang eines Durchmessers davon erstreckt, wobei das/die Magnetfeld erzeugenden Elemente (24a, 36) und, falls vorhanden, das/die ferromagnetische/n Element/e (24a, 36) wahlweise an den äußersten oder peripheren Teilen der Mitnehmervorrichtung (35) und der Antriebsvorrichtung (24") positioniert sind, wobei wahlweise:
A) sich die Mitnehmervorrichtung (35) erstreckt:
- über einen überwiegenden Teil der Bodenwand (12) des Behälters (10), wobei sich die Mitnehmervorrichtung (35) in der Regel über mindestens 75 oder 85 % eines Oberflächenbereichs der Bodenwand (12) erstreckt; oder
- über einen wesentlichen Teil der Bodenwand (12) entlang eines Durchmessers davon, wobei sich die Mitnehmervorrichtung (35) in der Regel über mindestens 75 oder 85 % eines Durchmessers der Bodenwand erstreckt;
und/oder
B) sich die Antriebsvorrichtung (24) erstreckt:
- über einen überwiegenden Teil eines Bodenteils des Sitzes (21), wobei sich die Antriebsvorrichtung (24) in der Regel über mindestens 75 oder 85 % eines Oberflächenbereichs des Bodenteils erstreckt; oder
- über einen wesentlichen Teil des Bodenteils des Sitzes (21) entlang eines Durchmessers davon, wobei sich die Antriebsvorrichtung (24) in der Regel über mindestens 75 oder 85 % eines Durchmessers des Bodenteils erstreckt.

7. Maschine nach Anspruch 5 oder 6, wobei das Modul (20) und die Mitnehmervorrichtung (35) jeweils mit einem ein Magnetfeld erzeugendes Löseelement (24"', 37) versehen sind, wie etwa Löseelemente (24"', 37), die über die Bodenwand (12) des Behälters (10) und wahlweise über die Gehäuseeinrichtung (22') einander zugewandt sind, wobei die Löseelemente in einer gegenseitig abstoßenden Ausrichtung angebracht sind, um eine Trennung der Mitnehmervorrichtung (35) von der Antriebsvorrichtung (24") zu ermöglichen, wobei dem Löseelement (24"', 37) wahlweise eines oder mehrere der folgenden Merkmale zugeordnet sind:
A) die Löseelemente (24"', 37) sind einander entlang einer Achse (30') zugewandt, die kollinear mit oder im Allgemeinen parallel zu der Zentralachsenrichtung (30') ist, wobei die Löseelemente (24"', 37) zum Beispiel ein Paar Löseelemente (24"', 37) umfassen, die einander entlang einer Achse (30') zugewandt sind, die kollinear mit der Zentralachsenrichtung (30') ist;
B) die Löseelemente (24"', 37) erzeugen zusammen eine solche abstoßende Kraft, dass das Trennen der Mitnehmervorrichtung (35) von der Antriebsvorrichtung (24") bei magnetischer Kopplung eine maximale Kraft von weniger als 15 N, wie etwa weniger als 10 N, z. B. weniger als 5 N erfordert;
C) das Modul (20) und die Mitnehmervorrichtung (35) sind mit einer Vielzahl von Paaren dieser ein Magnetfeld erzeugenden Löseelemente bereitgestellt, die in einer einander abstoßenden Ausrichtung angebracht sind, wahlweise um die Zentralachsenrichtung angebracht sind; und
D) das Löseelement (24"') des Moduls (20) befindet sich in oder auf: der Mitnehmervorrichtung (24") und/oder der Gehäuseeinrichtung (22').

8. Maschine nach einem der vorstehenden Ansprüche, die ein Laufrad (30) umfasst, das ein treibendes Glied (31) mit einer im Allgemeinen scheibenförmigen oder konisch geformten treibenden Oberfläche (31', 31", 31'") umfasst, das in Drehung um eine Zentralachsenrichtung (30') der treibenden Oberfläche (31', 31", 31'") antreibbar ist, um auf die Lebensmittelsubstanz in dem Behälter (10) eine mechanische Wirkung auszuüben, um verschiedene Phasen in der Lebensmittelsubstanz zu homogenisieren, wobei die treibende Oberfläche wahlweise:
- sich über einen überwiegenden Teil einer den Hohlraum (10') begrenzenden Bodenwand (12) erstreckt, wie etwa eine treibende Oberfläche mit einem Oberflächenbereich, der größer als 75 oder 85 % der Bodenwand (12) des Hohlraums ist; und/oder
- mindestens einen Teil (31', 31", 31'") aufweist, der in einer Richtung parallel zur Achsenrichtung (30') vorspringt oder vertieft ist, wie etwa eine Oberfläche (31', 31"), die in einer Kreisrichtung um die Achsenrichtung (30') gewellt ist, oder eine Oberfläche mit einem im Allgemeinen aufrechten radialen Vorsprung oder einer im Allgemeinen aufrechten radialen Vertiefung (31"').

9. Maschine nach Anspruch 8, wobei das treibende Glied (31) mindestens eine Öffnung (31a, 31b1, 31b2, 31b4, 31b4, 31c, 31c', 31d1, 31d2) aufweist, wie etwa eine Blasenverfeinerungsöffnung (31a, 31b1, 31b2, 31b4, 31b4, 31c, 31c', 31d1, 31d2), die z. B. wirkt, indem Gasblasen, die in der Lebensmittelsubstanz enthalten sind, geteilt werden, um zum Beispiel Luftblasen zu teilen, die in Milch enthalten sind, und die sich von der treibenden Oberfläche (31', 31", 31'") zu einer gegenüberliegenden Oberfläche (31^{IV}) des Glieds (31) durch das Glied (31) erstreckt, wobei die Öffnung (31a, 31b1, 31b2, 31b4, 31b4, 31c, 31c', 31d1, 31d2):
- durch mindestens einen Abschnitt (31bx, 31by, 31cx, 31cy, 31cx', 31cy') begrenzt ist, der entlang der Öffnung (31a, 31b1, 31b2, 31b4, 31b4, 31c, 31c', 31d1, 31d2) eine Ausrichtung (31n) aufweist, die von einer Bewegungsrichtung (31r) des Abschnitts (31bx, 31by, 31cx, 31xy, 31cx', 31cy') abgewinkelt ist, wenn die treibende Oberfläche (31', 31", 31'") in Drehung (r) um die Zentralachsenrichtung (30') angetrieben wird, wie etwa in einer Ausrichtung (31n) orthogonal zu der Bewegungsrichtung (31r); und/oder
- durch einen fiktiven Kreissektor (31x, 31y, 31z) beschränkt ist, der an der scheibenförmigen oder konisch geformten treibenden Oberfläche (31', 31", 31"') definiert ist und sich zu der gegenüberliegenden Oberfläche (31^{IV}) erstreckt,
wobei wahlweise:
- dieser Sektor (31x, 31y, 31z) sich über einen Winkel im Bereich von 1 bis 359°, wie etwa 5 bis 270°, z. B. 15 bis 180°, zum Beispiel 30 bis 90°, erstreckt; und/oder
- Abschnitte (31by, 31by, 31cx, 31cy, 31dx, 31dy) des Glieds (31), die benachbart zu Radien (31x, 31y) sind, die diesen Sektor (31x, 31y, 31z) definieren und die diese Öffnung (31a, 31b1, 31b2, 31b4, 31b4, 31c, 31d1, 31d2) begrenzen, dazu eingerichtet sind, Gasblasen, die in der Lebensmittelsubstanz enthalten sind, zu teilen, wenn sich die Gasblasen in oder durch die Öffnung (31a, 31b1, 31b2, 31b4, 31b4, 31c, 31d1, 31d2) erstrecken, während die treibende Oberfläche (31', 31", 31'") in Drehung angetrieben wird,
wobei eine oder mehrere der Öffnungen (31a, 31b1, 31b2, 31b4, 31b4, 31c, 31c', 31d1, 31d2) wahlweise mindestens eines der folgenden Merkmale aufweist:
A) mindestens eine Öffnung (31a) weist allgemein eine Bogenform auf, z. B. eine allgemeine Form einer Niere oder Bohne, wie etwa eine Form (31a), die sich um die Zentralachsenrichtung (30') erstreckt;
B) mindestens eine Öffnung (31b1, 31b2, 31b3, 31b4) weist allgemein eine Kreisform auf, wie etwa eine Kreisform, die versetzt von der Zentralachsenrichtung (30') angeordnet ist;
C) mindestens eine Öffnung (31c, 31c') weist eine allgemein ovale oder elliptische Form auf, wie etwa eine sich radial an dem Glied (31) erstreckende Form;
D) mindestens eine Öffnung (31d1, 31d2) weist eine allgemein polygonale Form auf, wie etwa eine Form, die versetzt von der Zentralachsenrichtung (30') angeordnet ist;
E) mindestens eine Öffnung (31c) erstreckt sich als (eine oder) mehrere einzelne Öffnung(en) von einer Position (31ca) benachbart zur Zentralachsenrichtung (30') zu einer Position (31cb) benachbart zu einem peripheren Umfang des Glieds (31);
F) mindestens eine Öffnung (31a, 31b1, 31b2, 31b4, 31b4, 31c, 31d1, 31d2) ist neben der Zentralachsenrichtung (30') angeordnet;
G) mindestens eine Öffnung (31c') ist an der Zentralachsenrichtung (30') angeordnet; und
H) eine Vielzahl von Öffnungen (31b1, 31b2, 31b3, 31b4; 31c, 31c'; 31d1, 31d2) bildet ein durchbrochenes Netz aus zwei oder mehr beabstandeten Öffnungen (31b1, 31b2, 31b3, 31b4; 31c, 31c'; 31d1, 31d2), wahlweise:
- sind die Öffnungen (31b1, 31b2, 31b3, 31b4; 31c, 31c'; 31d1, 31d2) um die Zentralachsenrichtung (30') voneinander abgewinkelt; und/oder
- sind die Öffnungen (31b1, 31b2, 31b3, 31b4; 31c, 31c'; 31d1, 31d2) in verschiedenen nebeneinander liegenden oder überlappenden gedachten Ringen (31ba_31bf, 31bb_31be, 31bc_31bg, 31bd_31bh; 31da_31dd, 31db_31dc), die sich gemeinsam im Wesentlichen ohne Unterbrechung über einen gedachten kontinuierlichen Gesamtring (31ba_31bb; 31da_31db) erstrecken, enthalten und erstrecken sich radial darüber.

10. Maschine nach einem der vorstehenden Ansprüche, wobei das Laufrad (30) ein treibendes Glied (31) aufweist, das in dem Behälter (10) zum Ausüben einer mechanischen Wirkung auf die Lebensmittelsubstanz in dem Behälter (10) antreibbar ist und einen Fuß (35, 38) zum Beabstanden des treibenden Glieds (31) über einer Bodenwand (12) des Behälters (10) aufweist, wie etwa einen Fuß (35, 38), der unter dem treibenden Glied (31) mit einem Abstand (d) im Bereich von 0,5 bis 2,5 cm, z. B. 1 bis 2 cm, beabstandet ist, wobei der Fuß (35, 38) wahlweise Folgendes umfasst:
- eine nach unten gerichtete, konvex gekrümmte Kontaktoberfläche (38), z. B. einen nach unten vorstehenden Stift (38), derart, dass das Laufrad (30) vollständig über die konvex gekrümmte Kontaktoberfläche (38) auf der Bodenwand (12) ruht, wobei der konvex gekrümmte Kontakt über einen Gesamtoberflächenbereich von in der Regel weniger als 5 mm², wie etwa weniger als 4, z. B. weniger als 3, zum Beispiel weniger als 2, zum Beispiel weniger als 0,3 mm² in Kontakt mit der Bodenwand (12) steht, wobei die Kontaktoberfläche (38) wahlweise aus hartem Polymermaterial gefertigt ist, wie etwa Hartkunststoff oder lebensmittelsicherem Edelstahl, und durch eine Oberfläche der Bodenwand (12) aus Keramikmaterial, wie etwa PTFE, oder lebensmittelsicherem Edelstahl, z. B. AISI 304 Stahl, abgestützt ist; und/oder
- eine Vorrichtung (35) zum Koppeln an einen Motor (24), wie etwa eine Mitnehmervorrichtung (35) zum magnetischen Koppeln an eine Treibervorrichtung (24") des Elektromotors (24), wie etwa eine Kopplungsvorrichtung (35) mit einer allgemeinen Form einer Scheibe oder eines Sterns, die sich parallel über einen Boden (12) des Hohlraums (10') erstreckt und eine Vielzahl von Magnetfeld erzeugenden Elementen (24a) und/oder ferromagnetischen Elementen (36) trägt.

11. Maschine nach einem der vorstehenden Ansprüche, die eine Vorrichtung zur Homogenisierung der Lebensmittelphase umfasst, die mindestens eines der Folgenden umfasst:
- eine Expansionskammer, wie etwa eine Venturikammer;
- einen statischen Mischer; und
- eine Couette-Durchflussvorrichtung,
wie etwa eine Vorrichtung zur Homogenisierung der Lebensmittelphase, die:
- sich an einem Auslass des Behälters (10) befindet; und/oder
- mit Dampf und/oder Luft in Kombination mit der Lebensmittelsubstanz, z. B. Milch, arbeitet.

12. Maschine nach einem der vorstehenden Ansprüche, wobei der Trennabschnitt (22") den Sitz (21) mindestens teilweise umgibt, wobei der Trennabschnitt (22") wahlweise eine den Sitz (21) umgebende aufrechte Wand und/oder eine einen Boden des Sitzes (21) begrenzende Mulde oder Plattform bildet.

13. Maschine nach einem der vorstehenden Ansprüche, wobei der Außenabschnitt (22"'):
A) einen Sockel oder Fuß der Gehäuseeinrichtung (22') bildet, wobei die Gehäuseeinrichtung (22') wahlweise einen seitlichen Abschnitt (22^{IV}) einschließt, der sich wie folgt seitlich nach unten erstreckt:
- an einer Kante des Außenabschnitts (22'") entlang, wie etwa eines seitlichen Abschnitts (22^{IV}) mit einer oder mehreren Durchgangsöffnungen (22^{V}) zum Leiten von Wärme, die über den Außenabschnitt abgeführt wird, von der Unterseite des Außenabschnitts (22'") seitlich aus der Gehäuseeinrichtung (22') heraus; oder
- bis über eine Kante des Außenabschnitts, wobei der Außenabschnitt wahlweise einen oder mehrere Abführungskanäle aufweist, um Wärme, die über den Außenabschnitt abgeführt wird, unter dem Seitenabschnitt aus der Gehäuseeinrichtung (22') heraus zu leiten;
und/oder
B) eine Kühlvorrichtung, wie etwa mindestens eine von einem Kühler, einem Wärmeableiter, z. B. einem Ventilator, und einer Wärmesenke, einschließt, wobei die Kühlvorrichtung wahlweise eine Vielzahl von Vorsprüngen (221) und Vertiefungen (222) umfasst, die eine Oberfläche zum Wärmeaustausch zwischen der Kammer (22, 22a) und dem Äußeren der Maschine (1) bildet.

14. Maschine nach einem der vorstehenden Ansprüche, wobei die Gehäuseeinrichtung (22') einen Verbindungsabschnitt (22^{IV}) umfasst, der den Trennabschnitt (22") mit dem Außenabschnitt (22"') verbindet, wie etwa einen Verbindungsabschnitt, der eine äußere Seitenwand der Gehäuseeinrichtung (22') bildet.

15. Maschine nach einem der vorstehenden Ansprüche, wobei die Kammer (22, 22a) Folgendes umfasst:
- eine erste Kammer (22), die mindestens eines von einem Elektromotor (24), einer Steuereinheit (25) und einer Leistungsverwaltungseinheit (26) enthält, wie etwa eine Basiskammer (22) oder eine Kammer unterhalb des Sitzes (21); und
- eine zweite Kammer (22a), die den Generator (23) enthält, wie etwa eine obere Kammer, z. B. eine Kammer, die um den Sitz (21) gebildet ist,
wobei wahlweise:
- die erste und die zweite Kammer durch einen Aufteilungsabschnitt (22^{V}) der Gehäuseeinrichtung (22') getrennt sind; und/oder
- die zweite Kammer (22a) über die Gehäuseeinrichtung (21) an den Sitz (21) angrenzt und die erste Kammer (22) über die Gehäuseeinrichtung (22') von dem Sitz (21) entfernt oder dazu benachbart ist.

## Revendications

1. Machine (1) destinée à chauffer une substance alimentaire, telle que du lait ou une substance à base de lait, sous forme de machine indépendante ou de machine incorporée dans un robot de cuisine tel qu'un appareil de préparation de boisson par ex. une machine à café, une telle machine (1) comprenant :
- un récipient (10) délimitant une cavité (10') pour contenir ladite substance alimentaire à chauffer, tel qu'un récipient (10) qui est mécaniquement et/ou électriquement passif et/ou qui a une paroi latérale (11) et une paroi de fond (12) pour délimiter sa cavité (10'), le récipient (10) étant éventuellement :
- généralement en forme de coupelle ou en forme de bol ou en forme de cylindre dans laquelle la paroi latérale (11) est généralement verticale et la paroi de fond (12) est généralement plate ou incurvée ; et/ou
- pourvu d'un matériau extérieur thermiquement isolant (10") et/ou d'une poignée, pour la saisie et le déplacement facultatif du récipient (10) par une main humaine ;
- un module (20) comprenant un moyen de logement (22), qui contient une chambre interne (22, 22a) et qui délimite un siège (21), tel qu'un siège généralement planaire ou cylindrique ou en forme de coupelle (21), sur ou dans lequel le récipient (10) est monté, tel que monté de façon amovible, la chambre (22, 22a) contenant un ou plusieurs composants électriques (23, 24, 25, 26) comprenant un générateur (23) d'un champ électromagnétique oscillant dirigé vers le récipient (10) destiné à chauffer ladite substance alimentaire dans le récipient (10), au moins un desdits un ou plusieurs composants électriques (23, 24, 25, 26) rayonnant de la chaleur dans la chambre (22, 22a) lorsqu'il est alimenté électriquement, comme de la chaleur générée par une résistance électrique du composant (23, 24, 25, 26), facultativement les un ou plusieurs composants électriques (23, 24, 25, 26) comprenant au moins l'une parmi une unité de commande (25) et une unité de gestion énergétique (26),
le moyen de logement (22') ayant une section de séparation (22") et une section externe (22"') distincte de la section de séparation (22"), la section de séparation et la section externe délimitant au moins une partie de la chambre (22, 22a), la section de séparation (22") séparant la chambre (22, 22a) du siège (21), la section externe (22"') étant séparée du siège (21) par la chambre (22, 22a),
**caractérisée en ce que** la section de séparation (22") et la section externe (22"') ont des conductivités thermiques respectives telles que cela favorise une évacuation de ladite chaleur rayonnée à l'intérieur de la chambre (22, 22a) vers l'extérieur du module (20) par l'intermédiaire de la section externe (22"'), plutôt que dans le récipient (10) par l'intermédiaire de la section de séparation (22"), facultativement le rapport de la chaleur évacuée par l'intermédiaire de la section externe (22"') à la chaleur évacuée par l'intermédiaire de la section de séparation (22") étant supérieur à 2, comme d'au moins 4, par exemple d'au moins 9.

2. Machine selon la revendication 1, dans laquelle le générateur (3) est configuré pour :
- induire un courant de chauffage électrique dans un composant pouvant être chauffé par induction (11) d'une telle machine (1), le composant pouvant être chauffé par induction (11) ayant une surface (11') pour rayonner de la chaleur dans la cavité (10'), le composant (11) étant situé dans la cavité ou formant une paroi (11) du récipient (10) moyennant quoi la surface de composant (11') délimite la cavité (10'), éventuellement le générateur (23) comprenant au moins une bobine d'induction, telle qu'une bobine d'induction située adjacente à la section de séparation (22") ; et/ou
- émettre des micro-ondes pour générer des micro-ondes de chauffage directement dans ladite substance alimentaire dans le récipient (10).

3. Machine selon la revendication 1 ou 2, dans laquelle les un ou plusieurs composants électriques (23, 24, 25, 26) incluent un moteur électrique (24).

4. Machine selon la revendication 3, dans laquelle le moteur électrique (24) a un axe d'entraînement de sortie (24') avec un dispositif d'entraînement (24"), configuré pour entraîner dans le récipient (10) un dispositif suiveur (35) d'une roue (30), par exemple un disque de moussage et/ou un fouet, pour communiquer un effet mécanique à ladite substance alimentaire dans le récipient, par exemple pour homogénéiser différentes phases dans la substance alimentaire (10), telle qu'une division des bulles de gaz contenues dans ladite substance alimentaire par exemple la division des bulles d'air contenues dans le lait, facultativement le dispositif d'entraînement (24") et :
- le dispositif suiveur (25) étant configuré pour tourner autour d'une direction axiale centrale (30') ; et/ou
- le générateur (23) étant commandé par une unité de commande (25) selon un programme de traitement de la substance alimentaire, tel que l'entraînement de la roue (30) avec ou sans chauffage par l'intermédiaire du générateur (23), facultativement les un ou plusieurs composants électriques (23, 24, 25, 26) incluant un dispositif de refroidissement actif tel qu'un dispositif de réfrigération qui peut être activé et/ou désactivé pendant l'entraînement de la roue.

5. Machine selon la revendication 4, dans laquelle le dispositif d'entraînement (24") et le dispositif suiveur (35) sont couplés magnétiquement à travers une paroi latérale (11) et/ou une paroi de fond (12) du récipient (10), et dans laquelle :
- le dispositif d'entraînement (24") comprend un élément de génération de champ magnétique (24a), qui est agencé pour être couplé magnétiquement à un élément ferromagnétique correspondant (36) du dispositif suiveur (35), facultativement les éléments (24a, 36) se faisant face l'un à l'autre le long d'un axe de couplage (30"), qui est généralement parallèle à un axe de rotation (30') du dispositif suiveur (25) ;
- le dispositif suiveur (24") comprend un élément de génération de champ magnétique (36), qui est agencé pour être couplé magnétiquement à un élément ferromagnétique correspondant (24a) du dispositif d'entraînement (35), facultativement les éléments (24a, 36) se faisant face l'un à l'autre le long d'un axe de couplage (30"), qui est généralement parallèle à un axe de rotation (30') du dispositif suiveur (25) ; ou
- le dispositif d'entraînement (24") comprend un élément de génération de champ magnétique (24a), qui est agencé pour être couplé magnétiquement à un élément de génération de champ magnétique correspondant (36) du dispositif suiveur (35), facultativement les éléments (24a, 36) se faisant face l'un à l'autre le long d'un axe de couplage (30"), qui est généralement parallèle à un axe de rotation (30') du dispositif suiveur (25),
par exemple :
- l'élément de génération de champ magnétique comprenant un élément électroaimant ou un élément magnétique permanent, par exemple constitué d'au moins l'un parmi le fer, le nickel, le cobalt, des métaux des terres rares, par exemple le lanthanide et des alliages et oxydes contenant de tels métaux ainsi que des polymères (par exemple, des plastiques) portant de tels éléments et composants ; et/ou
- l'élément ferromagnétique étant constitué d'au moins un parmi Co, Fe, Fe₂O₃, FeOFe₂0₃, NiOFe₂O₃, CuOFe₂O₃, MgOFe₂O₃, Nd₂Fe₁₄B, Mn, Bi, Ni, MnSb, MnOFe₂O₃, Y₃Fe₅O₁₂, CrC₂, MnAs, Gd, Dy, EuO, Cu₂MnAl, Cu₂Mnln, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa et Co₂FeGe.
facultativement le dispositif d'entraînement (24") faisant face directement à la paroi latérale (11) et/ou à la paroi de fond (12) du récipient (10) ou faisant face indirectement à la paroi latérale (11) et/ou à la paroi de fond (12) du récipient (10) par l'intermédiaire d'une paroi latérale interne et/ou d'une paroi de fondinterne de logement (22") délimitant le siège (21), telle que la section de séparation (22").

6. Machine selon la revendication 5, dans laquelle le dispositif suiveur (35) s'étend sur une partie prédominante de la paroi de fond (12) du récipient (10) ou à travers une partie substantielle de la paroi de fond (12) le long d'un diamètre de celle-ci et dans laquelle le dispositif d'entraînement (24) s'étend sur une partie prédominante d'une partie inférieure du siège (21) ou sur une partie substantielle de la partie inférieure du siège (21) le long d'un diamètre de celui-ci, le ou les éléments de génération de champ magnétique (24a, 36) et le cas échéant le ou les éléments ferromagnétiques (24a, 36) étant positionnés au niveau de parties extrémales ou périphériques du dispositif suiveur (35) et du dispositif d'entraînement (24"), facultativement :
A) le dispositif suiveur (35) s'étendant :
- sur une partie prédominante de la paroi de fond (12) du récipient (10), le dispositif suiveur (35) s'étendant typiquement sur au moins 75 ou 85 % d'une superficie de la paroi de fond (12) ; ou
- sur une partie substantielle de la paroi de fond (12) le long d'un diamètre de celle-ci, le dispositif suiveur (35) s'étendant typiquement sur au moins 75 ou 85 % d'un diamètre de la paroi de fond;
et/ou
B) le dispositif d'entraînement (24) s'étendant :
- sur une partie prédominante d'une partie inférieure du siège (21), le dispositif d'entraînement (24) s'étendant typiquement sur au moins 75 ou 85 % d'une superficie de la partie inférieure ; ou
- sur une partie substantielle de la partie inférieure du siège (21) le long d'un diamètre de celui-ci, le dispositif d'entraînement (24) s'étendant typiquement sur au moins 75 ou 85 % d'un diamètre de la partie inférieure.

7. Machine selon la revendication 5 ou 6, dans laquelle le module (20) et le dispositif suiveur (35) sont chacun pourvus d'un élément de génération de champ magnétique de retrait (24"', 37), tel que des éléments de retrait (24"', 37) qui se font face l'un à l'autre par l'intermédiaire de la paroi de fond (12) du récipient (10) et facultativement par l'intermédiaire du moyen de logement (22'), les éléments de retrait étant montés dans une orientation de répulsion mutuelle pour faciliter une séparation du dispositif suiveur (35) du dispositif d'entraînement (24"), facultativement l'élément de retrait (24"', 37) étant associé à une ou plusieurs des caractéristiques suivantes :
A) les éléments de retrait (24"', 37) se faisant face l'un à l'autre le long d'un axe (30') qui est colinéaire avec ou généralement parallèle à la direction axiale centrale (30'), les éléments de retrait (24"', 37) comprenant par exemple une paire d'éléments de retrait (24"', 37) se faisant face l'un à l'autre le long d'un axe (30') qui est colinéaire avec la direction axiale centrale (30') ;
B) les éléments de retrait (24"', 37) générant conjointement une force de répulsion telle qu'une séparation du dispositif suiveur (35) du dispositif d'entraînement (24") lorsqu'ils sont couplés magnétiquement exige une force maximale qui est inférieure à 15 N, telle qu'inférieure à 10 N, par ex. inférieure à 5 N ;
C) le module (20) et le dispositif suiveur (35) étant pourvus d'une pluralité de paires de tels éléments de génération de champ magnétique de retrait qui sont montées dans une orientation de répulsion mutuelle, éventuellement montées autour de la direction axiale centrale ; et
D) l'élément de retrait (24"') du module (20) étant situé dans ou sur : le dispositif d'entraînement (24") et/ou le moyen de logement (22').

8. Machine selon une quelconque revendication précédente, qui comprend une roue (30) comprenant un élément de poussée (31) ayant une surface de poussée généralement en forme de disque ou de forme conique (31', 31", 31'") qui peut être entraîné en rotation (r) autour d'une direction axiale centrale (30') de la surface de poussée (31', 31", 31'") pour communiquer un effet mécanique à ladite substance alimentaire dans le récipient (10) pour homogénéiser différentes phases dans la substance alimentaire, facultativement, la surface de poussée :
- s'étendant sur une partie prédominante d'une paroi de fond (12) délimitant la cavité (10'), telle qu'une surface de poussée ayant une superficie qui est supérieure à 75 ou 85 % de la paroi de fond (12) de la cavité ; et/ou
- ayant au moins une partie (31', 31", 31'") faisant saillie ou évidée dans une direction parallèle à la direction axiale (30'), telle qu'une surface (31', 31") ondulée le long d'une direction circulaire autour de la direction axiale (30') ou une surface avec une saillie ou un évidement généralement vertical(e) radial(e) (31'").

9. Machine selon la revendication 8, dans laquelle l'élément de poussée (31) a au moins une ouverture (31a, 31b1, 31b2, 31b4, 31b4, 31c, 31c', 31d1, 31d2), telle qu'une ouverture d'affinage de bulles (31a, 31b1, 31b2, 31b4, 31b4, 31c, 31c', 31d1, 31d2) par ex. fonctionnant en divisant des bulles de gaz contenues dans ladite substance alimentaire par exemple pour diviser des bulles d'air contenues dans du lait, qui s'étend à travers l'élément (31) depuis la surface de poussée (31', 31", 31'") vers une surface opposée (31^{IV}) de l'élément (31), ladite ouverture (31a, 31b1, 31b2, 31b4, 31b4, 31c, 31c', 31d1, 31d2) étant :
- délimitée par au moins une partie (31bx, 31by, 31cx, 31cy, 31cx', 31cy') qui a le long de l'ouverture (31a, 31b1, 31b2, 31b4, 31b4, 31c, 31c', 31d1, 31d2) une orientation (31n) qui est inclinée à l'écart d'une direction de mouvement (31r) de la partie (31bx, 31by, 31cx, 31xy, 31cx', 31cy') lorsque la surface de poussée (31', 31", 31"') est entraînée en rotation (r) autour de la direction axiale centrale (30'), telle qu'une orientation (31n) qui est orthogonale à la direction de mouvement (31r) ; et/ou
- confinée par un secteur circulaire notionnel (31x, 31y, 31z) défini sur la surface de poussée en forme de disque ou de forme conique (31', 31", 31"') et s'étendant jusqu'à la surface opposée (31^{IV}), éventuellement :
- un tel secteur (31x, 31y, 31z) s'étendant sur un angle dans la plage de 1 à 359°, telle que 5 à 270°, par ex. 15 à 180° par exemple 30 à 90° ; et/ou
- des parties (31by, 31by, 31cx, 31cy, 31dx, 31dy) de l'élément (31) qui sont adjacentes à des rayons (31x, 31y) définissant un tel secteur (31x, 31y, 31z) et qui délimitent une telle ouverture (31a, 31b1, 31b2, 31b4, 31b4, 31c, 31d1, 31d2) étant configurées pour séparer des bulles de gaz contenues dans ladite substance alimentaire lorsque les bulles de gaz s'étendent dans ou à travers l'ouverture (31a, 31b1, 31b2, 31b4, 31b4, 31c, 31d1, 31d2) tandis que la surface de poussée (31', 31", 31'") est entraînée en rotation,
facultativement une ou plusieurs des ouvertures (31a, 31b1, 31b2, 31b4, 31b4, 31c, 31c', 31d1, 31d2) présentant au moins l'une des caractéristiques suivantes :
A) au moins une ouverture (31a) ayant une forme généralement arquée, par ex. une forme générale de rein ou de haricot, telle qu'une forme (31a) s'étendant autour de la direction axiale centrale (30') ;
B) au moins une ouverture (31b1, 31b2, 31b3, 31b4) ayant une forme généralement circulaire, telle qu'une forme circulaire qui est située en dehors de la direction axiale centrale (30') ;
C) au moins une ouverture (31c, 31c') ayant une forme généralement ovale ou elliptique, telle qu'une forme s'étendant radialement sur l'élément (31) ;
D) au moins une ouverture (31d1, 31d2) ayant une forme généralement polygonale telle qu'une forme qui est située en dehors de la direction axiale centrale (30') ;
E) au moins une ouverture (31c) s'étendant en tant qu'ouverture(s) individuelle(s) à partir d'une position (31ca) adjacente à la direction axiale centrale (30') jusqu'à une position (31cb) adjacente à un périmètre périphérique de l'élément (31) ;
F) au moins une ouverture (31a, 31b1, 31b2, 31b4, 31b4, 31c, 31d1, 31d2) étant située à côté de la direction axiale centrale (30') ;
G) au moins une ouverture (31c') étant située sur la direction axiale centrale (30') ; et
H) une pluralité d'ouvertures (31b1, 31b2, 31b3, 31b4 ; 31c, 31c' ; 31d1, 31d2) formant une ouverture ajourée de deux ouvertures espacées ou plus (31b1, 31b2, 31b3, 31b4 ; 31c, 31c' ; 31d1, 31d2), éventuellement :
- les ouvertures (31b1, 31b2, 31b3, 31b4 ; 31c, 31c' ; 31d1, 31d2) étant inclinées espacées autour de la direction axiale centrale (30') ; et/ou
- les ouvertures (31b1, 31b2, 31b3, 31b4 ; 31c, 31c' ; 31d1, 31d2) étant contenues à l'intérieur de et s'étendent radialement sur différents espaces annulaires notionnels juxtaposés ou se chevauchant (31ba_31bf, 31bb_31be, 31bc_31bg, 31bd_31bh ; 31da_31dd, 31db_31dc) qui s'étendent conjointement de manière sensiblement ininterrompue sur un espace annulaire continu notionnel global (31ba_31bb ;31da_31db).

10. Machine selon une quelconque revendication précédente, dans laquelle la roue (30) a un élément de poussée (31), qui peut être entraîné dans le récipient (10) pour communiquer un effet mécanique à ladite substance alimentaire dans le récipient (10) et qui possède un pied (35, 38) pour espacer l'élément de poussée (31) au-dessus d'une paroi de fond (12) du récipient (10), tel qu'un pied (35, 38) espacé sous l'élément de poussée (31) d'une distance (d) dans la plage de 0,5 à 2,5 cm, par exemple de 1 à 2 cm, facultativement le pied (35, 38) comprenant :
- une surface de contact courbée convexe orientée vers le bas (38), par ex. une goupille en saillie vers le bas (38), de telle sorte que la roue (30) repose sur la paroi de fond (12) entièrement par l'intermédiaire de ladite surface de contact courbée convexe (38), le contact courbé convexe étant en contact avec la paroi de fond (12) sur une superficie totale typiquement inférieure à 5 mm², telle que moins de 4 par ex. moins de 3, par exemple moins de 2, par exemple moins de 0,3 mm², facultativement la surface de contact (38) étant constituée d'un matériau polymère rigide, tel qu'un plastique dur ou de l'acier inoxydable apte au contact alimentaire et étant supportée par une surface de la paroi de fond (12) constituée d'un matériau céramique, tel que du PTFE ou de l'acier inoxydable apte au contact alimentaire, par ex. l'acier AiSi 304 ; et/ou
- un dispositif (35) pour le couplage à un moteur (24), tel qu'un dispositif suiveur (35) pour le couplage magnétique à un dispositif d'entraînement (24") du moteur électrique (24), tel qu'un dispositif de couplage (35) qui a une forme générale de disque ou d'étoile s'étendant parallèlement sur un fond (12) de la cavité (10') et qui supporte une pluralité d'éléments de génération de champ magnétique (24a) et/ou d'éléments ferromagnétiques (36).

11. Machine selon une quelconque revendication précédente, qui comprend un dispositif d'homogénéisation en phase alimentaire comprenant au moins l'un :
- d'une chambre d'expansion telle qu'une chambre de Venturi ;
- d'un mélangeur statique ; et
- d'un dispositif d'écoulement de Couette,
tel qu'un dispositif d'homogénéisation en phase alimentaire qui :
- est situé au niveau d'une sortie du récipient (10) ; et/ou
- fonctionne avec de la vapeur et/ou de l'air en combinaison avec ladite substance alimentaire par ex. du lait.

12. Machine selon une quelconque revendication précédente, dans laquelle la section de séparation (22") entoure au moins partiellement le siège (21), la section de séparation (22") formant facultativement une paroi verticale entourant le siège (21) et/ou un creux ou une plateforme délimitant un fond du siège (21).

13. Machine selon une quelconque revendication précédente, dans laquelle la section externe (22"') :
A) forme une base ou un pied du moyen de logement (22'), le moyen de logement (22') incluant facultativement une section latérale (22^{IV}) s'étendant latéralement vers le bas :
- le long d'un bord de la section externe (22"'), telle qu'une section latérale (22^{IV}) ayant une ou plusieurs ouvertures traversantes (22^{V}) pour faire passer de la chaleur évacuée par l'intermédiaire de la section externe depuis sous la section externe (22"') vers l'extérieur latéralement du moyen de logement (22') ; ou
- jusqu'au-dessus d'un bord de la section extérieure, la section extérieure ayant éventuellement un ou plusieurs canaux d'évacuation pour faire passer de la chaleur évacuée par l'intermédiaire de la section extérieure en dessous de la section latérale vers l'extérieur du moyen de logement (22') ;
et/ou
B) comprend un dispositif de refroidissement tel qu'au moins l'un d'un radiateur, d'un dissipateur, par ex. un ventilateur, et un dissipateur thermique, éventuellement le dispositif de refroidissement comprend une pluralité de parties saillantes (221) et d'évidements (222) formant une surface pour un échange thermique entre la chambre (22, 22a) et l'extérieur d'une telle machine (1).

14. Machine selon une quelconque revendication précédente, dans laquelle le moyen de logement (22') comprend une section de jointure (22^{IV}) qui joint la section de séparation (22") à la section externe (22"'), telle qu'une section de jointure formant une paroi latérale externe du moyen de logement (22').

15. Machine selon une quelconque revendication précédente, dans laquelle la chambre (22, 22a) comprend :
- une première chambre (22) contenant au moins l'un d'un moteur électrique (24), d'une unité de commande (25) et d'une unité de gestion énergétique (26), telle qu'une chambre de base (22) ou une chambre en dessous du siège (21) ; et
- une deuxième chambre (22a) contenant le générateur (23), telle qu'une chambre supérieure par ex. une chambre formée autour du siège (21),
éventuellement :
- les première et deuxième chambres étant séparées par une section de séparation (22^{V}) du moyen de logement (22') ; et/ou
- la deuxième chambre (22a) étant adjacente au siège (21) par l'intermédiaire du moyen de logement (21) et la première chambre (22) étant éloignée du siège (21) ou adjacente à celui-ci par l'intermédiaire du moyen de logement (22').
